(19) **Europäisches Patentamt**
**European Patent Office**
**Office européen des brevets**

(11) **EP 2 947 445 B1**

(12) **EUROPEAN PATENT SPECIFICATION**

(45) Date of publication and mention
of the grant of the patent:
**15.11.2017 Bulletin 2017/46**

(51) Int Cl.:
***G01M 7/00*** *(2006.01)*   ***E04B 1/00*** *(2006.01)*

(21) Application number: **14740900.7**

(86) International application number:
**PCT/JP2014/051013**

(22) Date of filing: **20.01.2014**

(87) International publication number:
**WO 2014/112630 (24.07.2014 Gazette 2014/30)**

(54) **METHOD FOR CORRECTING REPRESENTATIVE DISPLACEMENT WAVEFORM, AND METHOD FOR EVALUATING RESIDUAL SEISMIC PERFROMANCE OF BUILDING**

VERFAHREN ZUR KORREKTUR EINER REPRÄSENTATIVEN VERSCHIEBUNGSWELLENFORM UND VERFAHREN ZUR BEWERTUNG DER RESIDUALEN SEISMISCHEN LEISTUNG EINES GEBÄUDES

PROCÉDÉ DE CORRECTION DE FORME D'ONDE DE DÉPLACEMENT REPRÉSENTATIF ET PROCÉDÉ D'ÉVALUATION DE PERFORMANCE SISMIQUE RÉSIDUELLE DE BÂTIMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.01.2013 JP 2013008589**

(43) Date of publication of application:
**25.11.2015 Bulletin 2015/48**

(73) Proprietor: **National University Corporation Yokohama National University**
**Kanagawa 240-8501 (JP)**

(72) Inventor: **KUSUNOKI,Koichi**
**Yokohama-City**
**Kanagawa 240-8501 (JP)**

(74) Representative: **Gill, Stephen Charles et al**
**Mewburn Ellis LLP**
**City Tower**
**40 Basinghall Street**
**London EC2V 5DE (GB)**

(56) References cited:
**JP-A- 2003 344 213    JP-A- 2011 095 237**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

[Technical Field]

The present disclosure is directed to a method of correcting a representative displacement waveform, method of evaluating residual seismic performance of a construction, and is further directed to a seismic performance evaluation system, a computer, a program and an information storage medium which are related to above methods.

[Background Art]

From past, attempts to evaluate seismic performances of constructions after an earthquake have been conducted so that safeness of a construction can be evaluated. However, appearance evaluations such as those based on eye observation are still common and, in such cases, it is not easy to promptly evaluate the seismic performance of construction and quick and precise evaluation thereof is more difficult to achieve as constructions are getting higher and higher. In a case where a number of constructions are required to be evaluated after a wide area earthquake and so on, these measures are totally insufficient.

Patent literature 1 discloses a method including: calculating an absolute displacement from a measured value by an accelerator sensor; assuming a vibration mode of a construction and calculating a relative displacement and an absolute acceleration for each floor; calculating a representative displacement and a representative acceleration from these values to determine a performance curve for the construction; calculating an acceleration response spectrum and a displacement response spectrum from a measured waveform at a basement to determine a requirement curve for the construction; and evaluating residual seismic performance based on comparison of the performance curve and the requirement curve (See the document for detail and precise understanding).

Patent literature 2 discloses that a measured value by an acceleration sensor is processed through wavelet transformation and mode decomposition to determine ranks, and determined ranks are selected for an absolute acceleration and an absolute displacement so that an effect of disturbance is effectively separated and a meaningful performance curve can be obtained even for a construction which is greatly influenced by higher-order modes (See this document for detail and precise understanding).

[Citation List]

[Patent Literature]

[PTL 1] Japanese patent application laid-open No. 2003-344213
[PTL 2] Japanese patent application laid-open No. 2011-95237

[Summary of Invention]

[Technical Problem]

Excluding unnecessary ranks, i.e. unnecessary frequency bands or unnecessary frequency components by performing a time-frequency analysis against measured acceleration waveform as disclosed in Patent literature 2 would be advantageous in obtaining a less-noise-influenced performance curve and in reducing computational cost required to calculate a performance curve. However, analysis conducted by the present inventor has revealed that frequency bands which were presumed to be unnecessary and excluded may include a frequency band which may be valuable in evaluating a seismic performance of construction, i.e. a residual displacement of a construction as in the presently disclosed example.

As explained above, more precisely determining a performance curve and more precisely evaluating a seismic performance are desired.

[Solution to Problem]

According to an aspect of the invention, a method of correcting a representative displacement waveform according to claim 1 is provided.

Preferably, the method may further include a step of calculating a representative acceleration waveform used as a basis for said performance curve, wherein this step comprises:

a first step of performing, for a floor of a construction, a calculation of an absolute acceleration waveform that reflects the determined frequency band and does not reflect the frequency band other than the determined frequency band based on frequency analysis of measured acceleration waveform of a seismic wave; and

a second step of calculating the representative acceleration waveform that represents the absolute acceleration waveforms of the floors of the construction.

In the method for correcting representative displacement waveform, the frequency analysis may include performing wavelet transformation and selecting ranks, wherein ranks selected during the frequency analysis in the step for determining the displacement waveform for correction do not include ranks selected during the frequency analysis in the first step in the step of calculating the representative acceleration waveform.

Preferably, a rank including a frequency having the greatest maximum amplitude compared to other maximum amplitudes of other frequencies may be included in the ranks selected during the frequency analysis in the first step in the step of calculating the representative acceleration waveform.

Preferably, an acceleration value of the representative acceleration waveform may be a corrected value in accordance with an equivalent mass ratio.

Preferably, the method may further include:

a step of determining the representative displacement waveform used as a basis for said performance curve, wherein this step comprises:

a step of performing, for each floor in the construction, a calculation of an absolute displacement waveform through integral of acceleration value of an absolute acceleration waveform;

a step of calculating a relative displacement waveform for each floor by subtracting an absolute displacement waveform at a reference point from the absolute displacement waveform at each floor of the construction; and

a step of calculating a representative displacement waveform that represents the relative displacement waveforms for the floors.

A method of evaluating residual seismic performance of a construction based on the representative displacement waveform that is corrected by the above method is also disclosed herein.

A method of evaluating residual seismic performance of a construction by the use of a performance curve that is determined from the representative displacement waveform corrected by the above method and the representative acceleration waveform is also disclosed.

In another aspect of the invention, a computer according to claim 9 is provided.

In still another aspect of the invention, a program according to claim 10 is provided.

An information storage medium in which the above program is stored in a readable manner is also disclosed herein.

In yet still another aspect of the invention, a method of evaluating residual seismic performance of a construction according to claim 12 is provided.

In still another aspect of the invention, a seismic performance evaluation system according to claim 13 is provided.

[Advantageous Effects of Invention]

The present invention may enable to more precisely determine a performance curve and to more precisely evaluate a seismic performance.

[Brief Description of Drawings]

[Fig. 1] Fig. 1 is a schematic diagram of a system configuration of a seismic performance evaluation system according to a first embodiment of the present invention, schematically illustrating an arrangement in a construction.

[Fig. 2] Fig. 2 is a schematic diagram of a system configuration of a seismic performance evaluation system according to a first embodiment of the present invention, schematically illustrating each system configuration of a terminal device provided at each floor of a construction and one server device provided at one place in a construction.

[Fig. 3] Fig. 3 is a schematic flowchart showing steps in which a seismic performance evaluation system according to a first embodiment of the present invention evaluates a seismic performance of a construction; this flowchart includes a flowchart concerning correction of a representative displacement waveform.

[Fig. 4] Fig. 4 is a chart for explaining a selection of ranks after wavelet transformation, showing a maximum amplitude for each frequency.

[Fig. 5] Fig. 5 is a chart for showing a modeling of a "performance curve for the use of modeling" which is generated through wavelet transformation.

[Fig. 6] Fig. 6 is a chart showing a displacement waveform that is in accordance with a residual displacement, the residual displacement being obtained by applying a measured seismic wave to an approximation formula that is generated by modeling a "performance curve for the use of modeling" that is generated through wavelet transformation, and then performing frequency-analysis on the obtained displacement waveform.

[Fig. 7] Fig. 7 is a chart showing a performance curve in which a residual displacement has been corrected by a method according to the present embodiment and a performance curve that is determined from actual measurements of acceleration and displacement, illustrating a comparison between the respective performance curves.

[Fig. 8] Fig. 8 is an explanatory diagram for showing an example of an evaluation method of evaluating a seismic performance using the determined performance curve.

[Fig. 9] Fig. 9 is a displacement waveform chart that shows an actually measured displacement which swings along time.

[Fig. 10] Fig. 10 is a chart showing a waveform that is obtained by performing wavelet-transformation on the displacement waveform shown in Fig. 9 and by selecting a main rank.

[Fig. 11] Fig. 11 is a chart showing each of a performance curve L30 reflecting the displacement waveform shown in Fig. 9 and a performance curve L31 generated through wavelet transformation, showing extent of separation between a maximum response point of the performance curve L30 and a maximum response point of the performance curve L31.

[Fig. 12] Fig. 12 is a diagram showing that a ground acceleration is included in a measured acceleration.

[Fig. 13] Fig. 13 is a chart showing a performance curve with enhanced accuracy at a first test.

[Fig. 14] Fig. 14 is a chart showing a performance curve with enhanced accuracy at a second test.

[Fig. 15] Fig. 15 is a chart showing a performance curve with enhanced accuracy at a third test.

[Fig. 16] Fig. 16 is a chart relating to the first test similarly to Fig. 13 and showing a relationship between a representative displacement and an equivalent mass ratio.

[Fig. 17] Fig. 17 is a chart relating to the second test similarly to Fig. 14 and showing a relationship between a representative displacement and an equivalent mass ratio.

[Fig. 18] Fig. 18 is a chart relating to the third test similarly to Fig. 15 and showing a relationship between a representative displacement and an equivalent mass ratio.

[Fig. 19] Fig. 19 is a chart showing a performance curve calculated at a forth test and indicating a region including a performance curve that cannot be readily determined.

[Fig. 20] Fig. 20 is a chart showing a meaningfully determined performance curve that is calculated at a forth test by an improved method.

[Description of Embodiments]

Hereinafter, embodiments of the present invention will be described with reference to the drawings. Descriptions in the embodiments may be simplified in light of technical common knowledge. Also, drawings may be simplified in light of technical common knowledge.

<First embodiment>

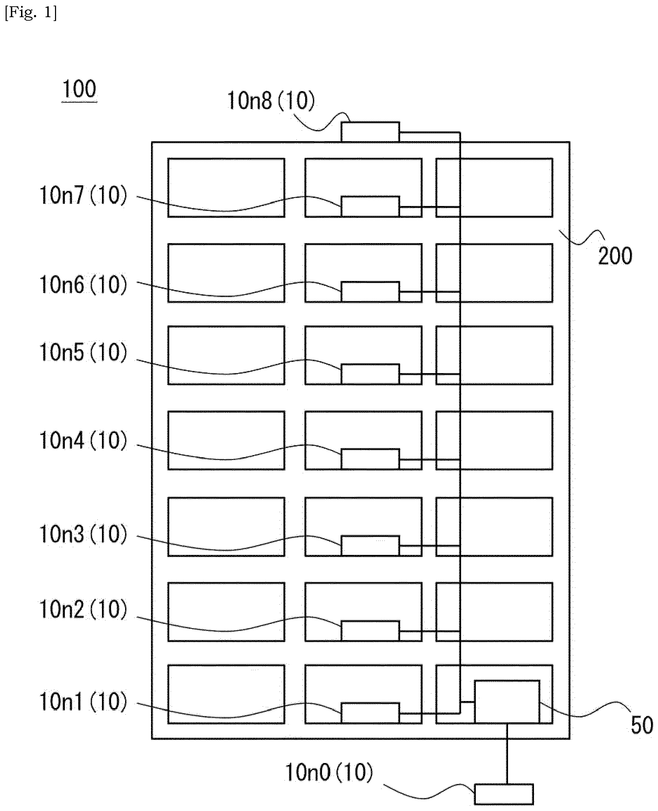

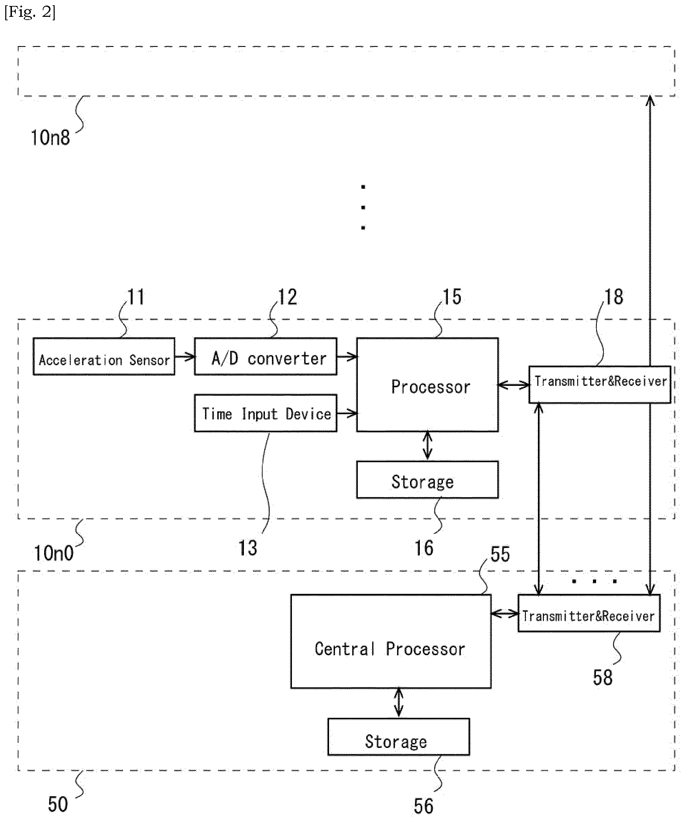

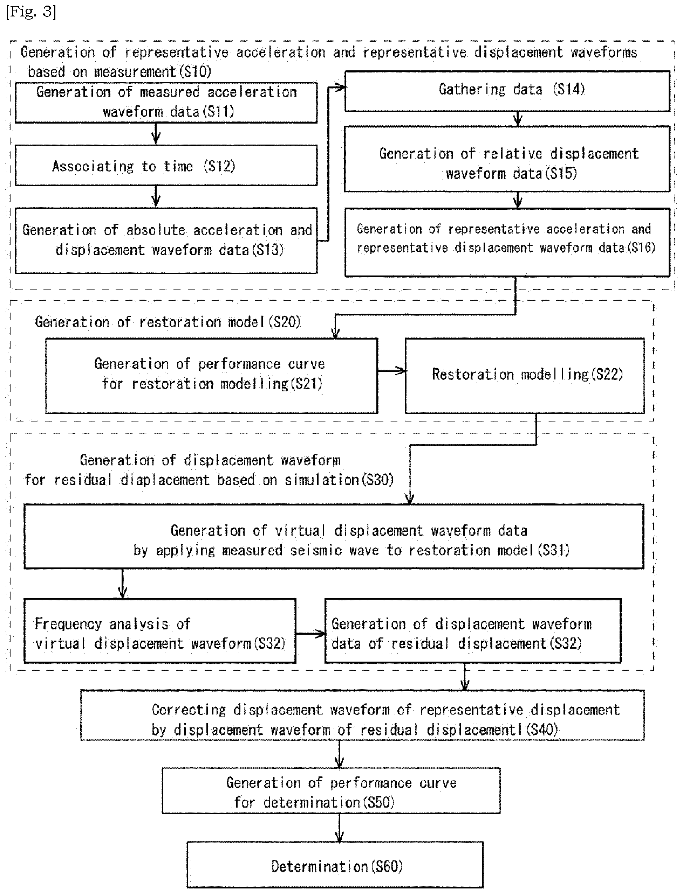

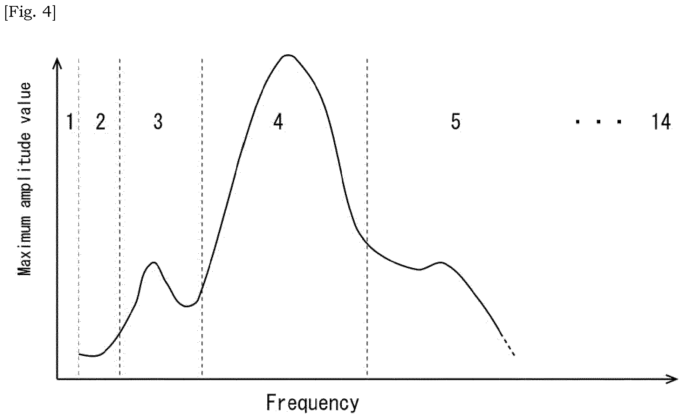

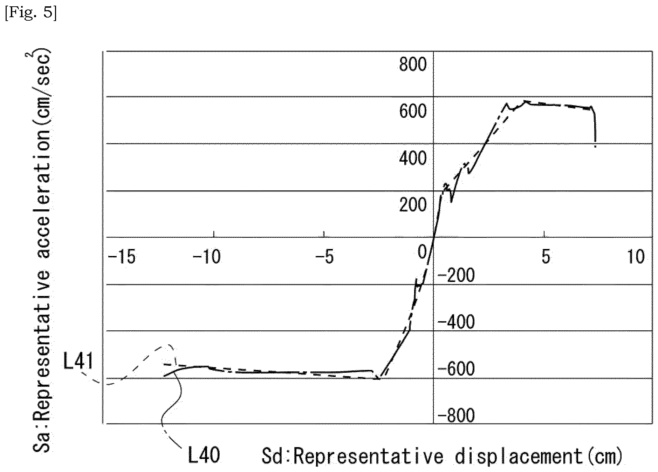

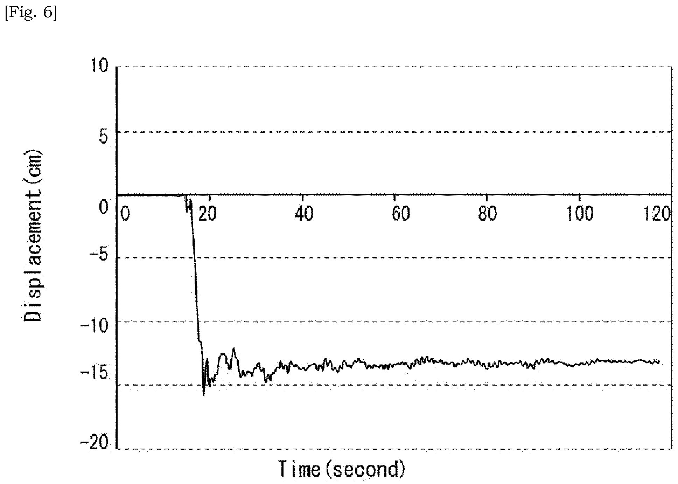

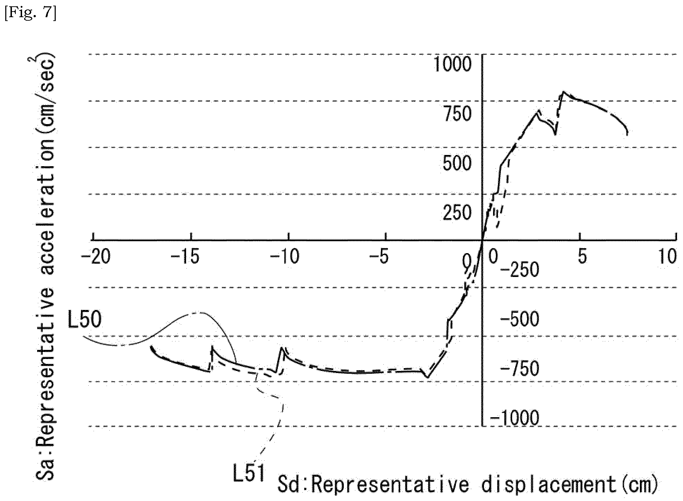

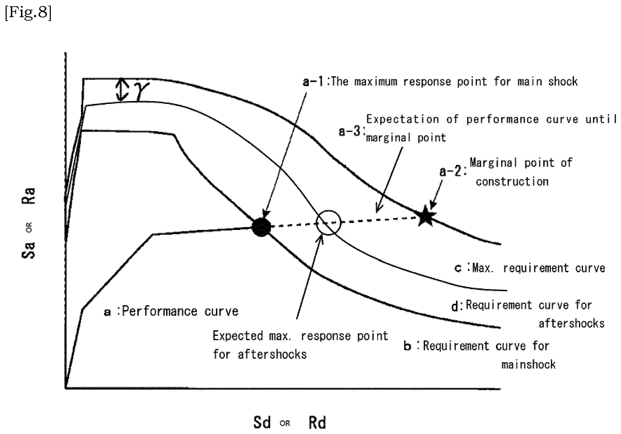

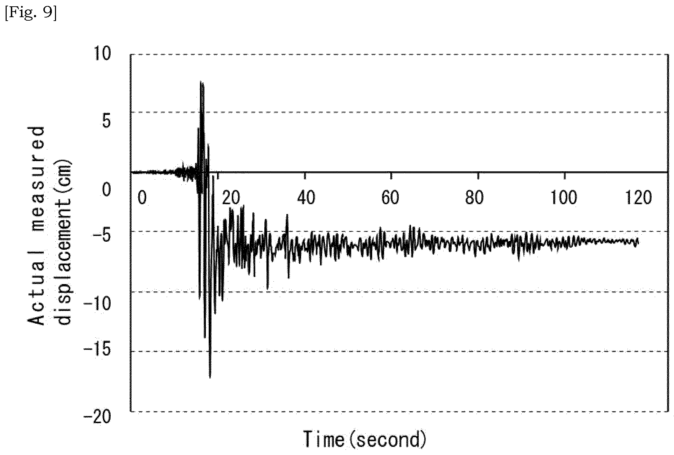

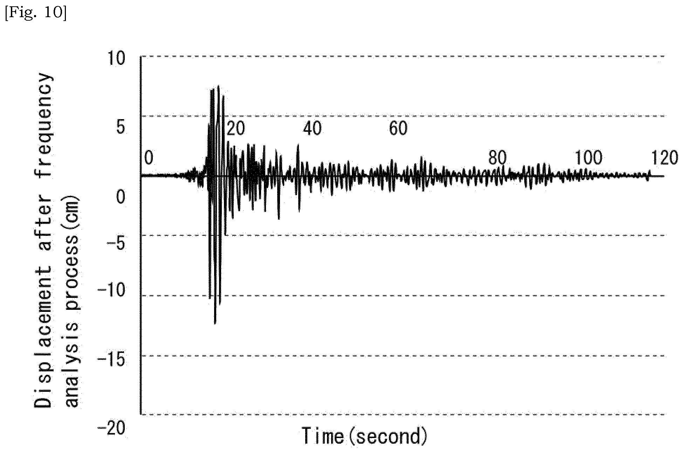

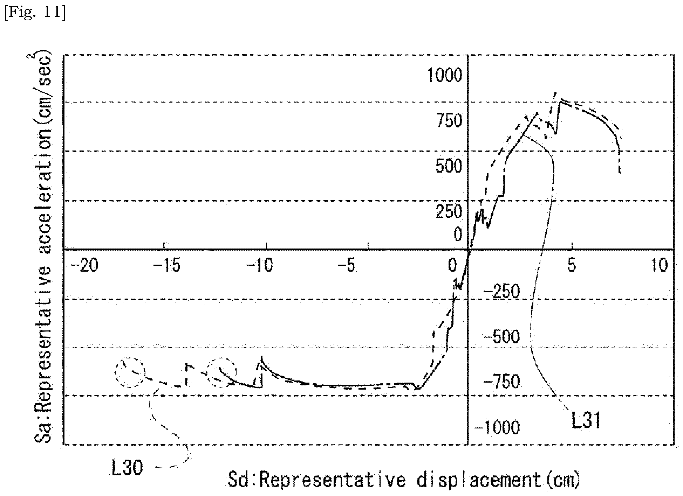

A first embodiment will be described with reference to Figs. 1-11. Fig. 1 is a schematic diagram of a system configuration of a seismic performance evaluation system, schematically illustrating an arrangement in a construction. Fig. 2 is a schematic diagram of a system configuration of a seismic performance evaluation system, schematically illustrating each system configuration of a terminal device provided at each floor of a construction and one server device provided at one place in a construction. Fig. 3 is a schematic flowchart showing steps in which a seismic performance evaluation system evaluates a seismic performance of a construction; this flowchart includes a flowchart concerning correction of a representative displacement waveform. Fig. 4 is a chart for explaining a selection of ranks after wavelet transformation, showing a maximum amplitude for each frequency. Fig. 5 is a chart for showing a modeling of a "performance curve for the use of modeling" which is generated through wavelet transformation. Fig. 6 is a chart showing a displacement waveform that is in accordance with a residual displacement, the residual displacement being obtained by applying a measured seismic wave to an approximation formula that is generated by modeling a "performance curve for the use of modeling" that is generated through wavelet transformation, and then frequency-analyzing the obtained displacement waveform. Fig. 7 is a chart showing a performance curve in which a residual displacement has been corrected by a method according to the present embodiment and a performance curve that is determined from actual measurements of acceleration and displacement, illustrating a comparison between the respective performance curves. Fig. 8 is an explanatory diagram for showing one example of an evaluation method of evaluating a seismic performance using the determined performance curve. Fig. 9 is a displacement waveform chart that shows an actually measured displacement swing along time. Fig. 10 is a chart showing a waveform that is obtained by performing wavelet transformation of the displacement waveform shown in Fig. 9 and by selecting a main rank. Fig. 11 is a chart showing each of a performance curve L30 reflecting the displacement waveform shown in Fig. 9 and a performance curve L31 generated through wavelet transformation, showing extent of separation between a maximum response point of the performance curve L30 and a maximum response point of the performance curve L31.

As shown in Fig. 1, an exemplary seismic performance evaluation system 100 includes a one server device 50 and a plurality of terminal devices 10nX (X= any integer), in this example nine terminal devices 10n0 to 10n8 are provided just as an example. The respective terminal devices 10n0-10n8 are in communication with the server 50 wirelessly or via wires, and measured data indicating an obtained measured waveform or a processed data of measured data by the respective terminal devices 10n0-10n8 are transmitted to the server device 50. The server device 50 can then collectively perform processing thereto. Functionalities may be arbitrarily allocated between the server device and the terminal devices. Therefore, a processing performed by the server device may be allocated to one or each terminal device. Alternatively, a processing performed by the terminal device may be allocated to the server device. The server device 50 may be configured by a corporation between plural server devices.

A construction 20 is exemplary illustrated as a structure such as a building and so on in Fig. 1, but the meaning of the construction should be broadly construed and it should encompass any structure such as a building, house, warehouse, bridge, elevated station, elevated highway and so on. Further, it should not be limited to a multi-floor structure, but it may encompass a first-floor-only structure.

As shown in Fig. 1, the reference point terminal device 10n0 is provided at a reference point on a ground, and the floor terminal devices 10n1-10n8 are arranged corresponding to the 1st to 8th floors. The reference point terminal device 10n0 may be provided at a foundation of the construction 200 or it may be provided on the ground on which the construction 200 is built. The reference point terminal device 10n0 may be omitted and observed information at a reference point observation site that neighbors the construction 200 may be used. The terminal device 10n1 provided at the first floor may be used as the reference point terminal device. The terminal devices 10n1-10n8 may be provided on the floor surface at each floor in any manner. It should be noted that the terminal devices are not required to be placed at each and every floor, but it may be provided only at an even number floors or odd number floors, for example.

In Fig. 1, the server device 50 is provided at 1st floor, but not limited thereto and it may be arranged at another floor. In some cases, it may be placed at a remote place geographically far away from that construction. In this case, a relay station may relay the communication between the terminal device and the server device. In other words, the server device 50 and the construction 200 can be remotely located by arranging the relay station between the terminal device 10 and the server device 50.

In Fig. 1, each terminal device 10n0-10n8 is coupled to the server device 50 via a wire. However, this illustration is only for facilitating the understanding for the sake of convenience and, therefore a known wireless communication technique may be applied to wirelessly couple them. Any wireless communication system between the terminal devices 10n0-10n8 and the server device 50 may be employed and, typically wireless LAN and so on may be used adequately.

Fig. 2 is a diagram showing a system configuration of a typical seismic performance evaluation system 100. As shown in Fig. 2, the terminal device 10n0 may be a commonly available computer that is configured to include an acceleration sensor 11, an A/D converter 12, a time input device 13, a processor 15, a storage 16, and a transmitting and receiving device 18. The output of the acceleration sensor 11 may be input to the A/D converter 12. The output of the A/D converter 12 may be input to the processor 15. The output of the time input device 13 may be input to the processor 15. The processor 15 and the storage 16 are coupled to communicate one another. The terminal device 10n1-10n8 may be similarly configured with the terminal device 10n0.

Any type and system of the acceleration sensor 11 may be employed. For example, the acceleration sensor 11 may be a small acceleration sensor configured by MEMS (Micro Electro Mechanical Systems) technologies. There are various acceleration detection systems such as a capacitance detection system, a piezo resistance system, a thermal detection system and so on, and any of which may be employed.

The A/D coverter 12 may be an analog/digital converter that includes a semiconductor circuit and so on. The A/D converter 12 may be integrated to the acceleration sensor 11. The time input device 13 may be a time data generating device that is provided for establishing time synchronization between the respective terminal devices 10 and, typically it generates time data that is synchronized with a carrier wave of standard time. The time synchronization between the respective terminal devices 10 may be secured by any other manner.

The processor 15 may be a circuit device, typically a CPU (Central Processing Unit) and so on, but it may be configured by an ASIC (Application Specific Integrated Circuit) and so on. The storage 16 may be any means for storing such as a non-volatile memory, a hard-disk drive, an optical drive incorporating an optical media and so on.

The transmitting and receiving device 18 may be an interface that transmits transmission data received from the processor 15 or transmits received data from a wired or wireless network to the processor 15. If the terminal device 10 is simplified, the output of the A/D converter 12 may directly be coupled to the transmitting and receiving device 18, and the transmitting and receiving device 18 may be provided with a processing capability.

A program describing steps to be performed by the terminal device 10n0 may be stored at the storage 16 of the terminal devices 10n0, and that program can be read out and performed by the processor 15 of the terminal devices 10n0. The processor 15 may perform the program and, accordingly achieve various processing possibly in corporation with other functional units. Any programming language may be employed and should not be limited to a particular language. The structure of the program will be described with reference to Fig. 3 and so on.

The server device 50 also has a central processor 55, a storage 56, and a transmitting and receiving device 58, similarly to the processor 15, the storage 16, and the transmitting and receiving device 18 of the terminal device 10n0. Greater amount of processing may be allocated to the server device 50, and therefore higher performance CPUs and memories compared to those of the terminal devices 10 may preferably be employed. The transmitting and receiving device 58 of the server device 50 may be in communication with the respective transmitting and receiving devices 18 of the respective terminal devices 10 via wires or wirelessly.

When an earthquake occurs, each terminal device 10 at each floor of the construction 200 may perform the following steps. The acceleration sensor 11 measures an acceleration and outputs a measured acceleration waveform which is, in turn, transformed by the A/D converter 12 to a digital measured waveform data. Digital values of time data from the time input device 13 are input to the processor 15. The processor 15 may associate the input measured acceleration waveform data and the time data so as to generate time-based measured acceleration waveform data, then it may perform processing and frequency analysis as will be described below; and it may instruct the transmitting and receiving device 18 to transmit the resulting absolute displacement waveform data and the resulting absolute acceleration waveform data. In response to the instruction from the processor 15, the transmitting and receiving device 18 may transmit the absolute displacement waveform data and the absolute acceleration waveform data to the server device 50.

Trigger may be provided so as to force each terminal device 10 to start its operation as described above. For example, the acceleration sensor 11 may be provided with an analog determination circuit so that, when an output value of the acceleration sensor 11 exceeds a predetermined threshold, the output from the acceleration sensor 11 may be supplied to the A/D converter 12. In this case, lower threshold may preferably be used. The acceleration sensor 11 and A/D converter 12 may continuously be active, and the processor 15 may perform the determination if an earthquake has occurred.

The server device 50 may perform various processing described below based on the absolute displacement waveform data and the absolute acceleration waveform data which are transmitted from each terminal device 10. Even if a time lag exists between times of receiving transferred data from each terminal device 10, this time lag may not be a problem because each output data from the terminal device 10 is associated with the standard time. Any method or manner may be employed to achieve time-synchronization between the terminal devices 10, and should not be limited to the disclosed example in this application. For example, the server device 50 or another time management computer transmits, considering the transmission time lag, time data to each terminal device 10 as required so that this time data can be used by each terminal device 10.

Based on the exemplary system configurations described above, an operation of the seismic performance evaluation system 100 will be described particularly with reference to Fig. 3. It should be noted that any system configuration for the seismic performance evaluation system 100 can be employed, and should not be limited to the above-described examples. Configurations may be employed which are different from a computer that necessarily requires a CPU and a memory. The terminal device 10 may be configured in a wired logic manner to simply include the acceleration measurement device and the transmission device.

As shown in Fig. 3, based on a measurement, a representative displacement waveform and a representative acceleration waveform may be generated (S10). Specifically, the acceleration sensor 11 in each terminal device 10 at each floor measures an acceleration; the measured analog acceleration is transferred from the acceleration sensor 11 to the A/D converter 12; the A/D converter 12 subsequently converts the acceleration input from the acceleration sensor 11 into a digital value and then outputs the digital value; and this acceleration value will be stored at an address space in the storage 16 via the processor 15. Accordingly, "measured acceleration waveform data" indicating acceleration waveform in which acceleration value swings along a time axis can be generated (S11). Simultaneously with step S11 or following to step S11, the processor 15 of each terminal device 10 at each floor associates the acceleration values stored or being stored in the storage 16 and the time data input or being input from the time input device 13 (S12) so that "time-based measured acceleration waveform data" can be generated and stored.

Next, the processor 15 of each terminal device 10 at each floor performs a predetermined processing against the "time-based measured acceleration waveform data" to generate an absolute acceleration waveform data (S13). Specifically, the processor 15 performs wavelet transformation, which is an example of frequency transformation, on the "time-based measured acceleration waveform data" to obtain frequency-analyzed data that is processed through frequency decomposition into a plurality of ranks. It should be noted that a rank is a technical term that indicates a frequency band or that corresponds to a frequency band, as widely known in the art.

Next, the processor 15 may select a rank included in the frequency-analyzed data, typically a rank that includes a frequency having the greatest maximum amplitude value compared with the maximum amplitude values of other frequencies, additionally a rank adjacent to that selected rank or a rank other than those ranks, and may generate "absolute acceleration waveform data" which is in accordance with the selected rank(s). The rank selected in this step may be a frequency band in which a frequency components well reflecting the ground move are included so that an effect of noises other than the response of the construction 200 may be minimized.

Any number of rank, one rank, two ranks, or three ranks may be selected. In other words, the frequency band width to be selected should not be limited to a particular band width. The ranks other than the rank including the frequency of maximum amplitude and adjacent ranks may be selectable. It should be noted that commonly used fourier transformation may be performed instead of the wavelet transformation. The selection of rank is equivalent to the selection of frequency band. The frequency width band of the rank may vary or may not vary depending to a mathematical formula to be used.

The "time-based measured acceleration waveform data" may be data that indicates an acceleration waveform in which an acceleration value swings along a time axis. The "wavelet transformation" may be performed to that waveform data so that the data is decomposed into three-dimensional components of frequency axis, time axis, and amplitude; and so that data is obtained in which frequency bands are categorized in ranks. The selection of rank that includes a frequency having the greatest maximum amplitude compared to other maximum amplitudes of other frequencies may easily be performed by comparing the maximum amplitude values of the frequencies. With respect to the selection of a rank being adjacent to the rank that includes a frequency having the greatest maximum amplitude compared with other maximum amplitudes of other frequencies, it may be determined through a calculation in which the number of the selected rank is incremented by 1 or is decremented by 1. These processing may be performable by the processor 15, but these processing may be allocated to other devices.

For the sake of a supplemental description, with reference to Fig. 4 in which frequency is taken in a lateral axis and the maximum amplitude values of frequencies are taken in a vertical axis, it can be noticeable that a rank number of a rank including a frequency having the greatest maximum frequency value is "4". The rank including a frequency having the greatest maximum amplitude value can be selectable by determining each maximum amplitude value for each frequency and then comparing the maximum amplitude values among the frequencies. The frequency band width of the rank 2 is doubled compared to that of the rank 1. The relationship between the rank 3 and the rank 2 is similar, and this holds true for other successive ranks.

In a case where acceleration values are measured at 0.01 second interval for 4 minutes, the frequency band may be decomposed into frequency bands of 14 ranks. In some cases, the rank 4, additionally ranks 3 and 5, may be main frequency bands that include relatively less noises, and other ranks 1, 2, and 6 to 14 may be minor frequency bands that include relatively greater noises. In Fig. 4, the waveform across the ranks 1 to 5 is illustrated, but an illustration of waveform across other ranks is omitted for the sake of simplified illustration.

The processor 15 may perform double integral of the acceleration values in the "absolute acceleration waveform" to generate an "absolute displacement waveform data" that indicates an absolute displacement waveform (S 13). As a result of the above-described wavelet transformation, the "absolute acceleration waveform" does reflect the main frequency band(s) but does not reflect the minor frequency band(s) which is deemed to be a noise component. Therefore, even though the double integral is performed, the resulting data is suppressed to be non-usable as a result of the increase of the noise components. In a case of Fig. 4, the main frequency band at least includes the rank 4 and, in some cases, additionally includes at least one of the neighboring rank 3 or 5 adjacent to the rank 4. The minor frequency band includes at least one rank other than the rank 4 and, in some cases it includes at least one rank other than the ranks 3 to 5.

The double integral of the absolute acceleration that is determined by the frequency analysis may be a convenient way in determining an absolute displacement so that an increase in a calculation cost may be avoided. However, other methods can be employed to determine an absolute displacement from the measured acceleration. Needless to say, the absolute acceleration or absolute displacement reflects the determined frequency band of the measured acceleration waveform and does not reflect frequency bands other than the determined frequency components.

The above described main frequency band or minor frequency band may change in accordance with a characteristic of measured seismic wave, and therefore no limitation should be made with respect to a rank number.

In this disclosed example, it is described that the "absolute acceleration waveform data" and "absolute displacement waveform data" are generated by a device provided at each floor of the construction 200, i.e. by the terminal device 10, but these processes may collectively be performed by the server device 50. In such a case, the server device 50 may perform the whole or a part of the respective steps S12 and S 13.

Next, the absolute acceleration waveform data" and the "absolute displacement waveform data" generated by each terminal device 10 at each floor are aggregated to the server device 50 through transmission via a wired or wireless network (S14). Specifically, the processor 15 of each terminal device 10 at each floor instructs the transmitting and receiving device 18 to transmit the "absolute acceleration waveform data" and the "absolute displacement waveform data" , and then the transmitting and receiving device 18 transmits those transmission data to a wired or wireless network. The data transmitted from each terminal device 10 at each floor is, through the wired or wireless network, received by the transmitting and receiving device 58 of the server device 50 designated by a destination address; then the data is transferred, such as by transfer control by the processor 55, to the storage 56; and finally the data is stored in a predetermined memory space in the storage 56.

Next, the central processor 55 of the server device 50 may generate, based on the "absolute displacement waveform data" sent from each terminal device 10 at each floor, a "relative displacement waveform data" that indicates a relative displacement waveform (S15). Specifically, the central processor 55 in the server device 50 may subtract, on the basis of time the following values being acquired, the displacement value of the "absolute displacement waveform" generated by the reference point terminal device 10n0 from the displacement value of the "absolute displacement waveform" generated by the 1st floor terminal device 10n1, so that a relative displacement waveform for 1st floor may be generated and stored.

The subtraction processes similar to one described above may be performed for the "absolute displacement waveform data" of the terminal devices 10n2 to 10n8 located at other floors. Thus, the "relative displacement waveform data" that reflects extent of shaking at each floor in a construction may be generated and stored. As described at the beginning, the acceleration value or the displacement value used as a standard should not be limited to those measured and processed by the terminal device 10n0. The values at the reference point observation site that neighbors the construction 200 may be used or those at the terminal device 10n1 may alternatively be used. Needless to say, the relative displacement reflects the determined frequency bands of the measured acceleration waveform and does not reflect the frequency bands other than the determined frequency components.

Next, the central processor 55 of the server device 50 generates "representative acceleration waveform data" based on the respective "absolute acceleration waveform data" sent from the respective terminal devices 10 (S16), and generates "representative displacement waveform data" based on the respective "relative displacement waveform data" determined at the step S15 as described above (S16). Needless to say, the representative acceleration or representative displacement reflects the determined frequency band of the measured acceleration waveform, and does not reflect the frequency bands other than the determined frequency components. The central processor 55 of the server device 50 calculates the representative acceleration value and the representative displacement value along a time axis based on the following mathematical formula of Math. 1 and Math. 2 so that the representative acceleration waveform and the representative displacement waveform may be generated and stored. As repeatedly described in this specification, mathematical formula used for calculating the representative acceleration value or representative displacement value should not be limited to those disclosed in this specification, and instead other mathematical formulas not disclosed in this specification may be utilized.

The representative displacement Sd and representative acceleration Sa may be calculated using the following formulas of Math. 1 and Math. 2, but such mathematical formulas are not a requisite, and thus modifications such as introducing other parameters thereto may be possible. The value of $m_i$ is available from a specification of the construction 200 and so on. Therefore, the value of $m_i$ may be stored in the storage 56 of the server device 50 in a readable manner before calculating the representative displacement waveform data and the representative acceleration waveform data. The value of $m_i$ may be individually described in a program which is installed to the server device 50.

[Math. 1]

$$Sd = \frac{\sum_{i=1}^{N} m_i \cdot_r g \cdot x_i}{\sum_{i=1}^{N} m_i}$$

where $m_i$ is a mass ratio at $i^{th}$ floor against a mass ratio at ground floor (1st floor in Japan), $_r g \cdot x_i$ is a displacement value of a relative displacement waveform at $i^{th}$ floor generated through the wavelet transformation, wherein i is a natural number of equal to or greater than 1 which indicates a floor number. i=0 indicates a reference point, this is not used here though. The mass ratio may typically be determined by comparing floor areas.

8

[Math. 2]

$$Sa = \frac{\sum_{i=1}^{N} m_i \cdot {}_r g \cdot \ddot{X}_i}{\sum_{i=1}^{N} m_i}$$

where $m_i$ is a mass ratio at $i^{th}$ floor against a mass ratio at ground floor ($1^{st}$ floor in Japan), ${}_r g \cdot \ddot{X}_i$ is an acceleration value in an absolute acceleration waveform at $i^{th}$ floor generated through the wavelet transformation, wherein i is a natural number equal to or greater than 1 which indicates a floor number. i=0 indicates a reference point, this is not used here though. The mass ratio may typically be determined by comparing floor areas.

Accordingly, the representative displacement waveform data and the representative acceleration waveform data which are based on the measurement are generated by and stored in the server device 50.

Next, a restoration model is generated (S20). As a specific example, the following steps may be performed.

The central processor 55 of the server device 50 generates, based on the representative displacement waveform data and the representative acceleration waveform data which are determined at step S16, a performance curve (Sa-Sd curve) in a coordinate system in which a displacement value Sd of the representative displacement is taken in a lateral axis (first axis) and an acceleration value Sa of the representative acceleration is taken in a vertical axis (second axis) (S21). In this specification, this may be referred to as "a performance curve for restoration modelling" . Just for a reference, a performance curve L40 generated and stored in this embodiment is shown in Fig. 5. It should be noted that the representative displacement waveform and the representative acceleration waveform correspond with each other on the basis of time. Therefore, the performance curve can be determined by plotting, in that orthogonal system having the first axis of representative displacement value and the second axis of representative acceleration value, dots each of which is determined by a representative displacement value and a representative acceleration value at the same time. These processing maybe performed by a software running on a computer.

It would be apparent from the above descriptions that the performance curve for restoration modelling may be configured, based on the frequency analysis of measured acceleration waveform of a seismic wave, to reflect the determined frequency band of the measured acceleration waveform (In Fig. 4, rank 4 and at least one of frequency bands of ranks 3 and 5) and not to reflect the frequency bands other than the determined frequency band (for example, ranks 1, 2, or 5 to 14). Specifically, it can be said that the waveform/waveform data processed at steps S13 to S16, and S21 reflect, based on the frequency analysis of measured acceleration waveform of a seismic wave, the main frequency band of the measured acceleration waveform in a limited manner and do not reflect minor frequency band.

Next, the central processor 55 of the server device 50 performs a restoration modelling for the "performance curve for restoration modelling" so that approximation formula approximating the "performance curve for restoration modelling" can be generated (S22). Just for a reference, the calculated and stored approximation formula is shown as an approximation line L41 in Fig. 5. Many ways can be used for calculating the approximation formula and thus detail description thereto is omitted. For example, a commonly known relationship of structural feature may be utilized for the approximation. A plotted line of moving average values of acceleration at a constant interval with respect to the vertical axis of displacement value may be used for the approximation line. A straight-line approximation may be used for rough approximation. The kinds of approximation formulas to be used would be determined in accordance with the manner of the depicted performance curve, and a way of approximation may be changed in light of the manner of the performance curve.

Next, a displacement waveform for residual displacement based on simulation is generated (S30). Specifically, following steps are performed.

The central processor 55 of the server device 50 applies the acceleration value of acceleration waveform of seismic wave measured by the terminal device 10n0 at a reference point to the restoration model, i.e. the approximation formula calculated and stored as described above, so that data of displacement waveform of displacement values which swing along a time axis can be generated and stored. In this specification, this is referred to as a "virtual displacement waveform data" . Specifically, the central processor 55 of the server device 50 determines a displacement value that corresponds to a value obtained by using the approximation formula and numerically integrating the acceleration value of the measured acceleration waveform data by the terminal device 10n0 so that a time-based swinging waveform of displacement value can be generated and stored. The measured acceleration waveform of a seismic wave measured by the terminal device 10n1 located at $1^{st}$ floor may alternatively be used instead of that at a reference point, and it should not be limited to the measured value at a reference point. That is, any measured seismic wave at any measurement location may be utilized for generating the "virtual displacement waveform data".

Further, the measured acceleration waveform of the seismic wave applied to the approximation formula of model should not be limited to a measured acceleration waveform of main shock of seismic wave, but it may be a measured acceleration waveform of earthquake across a time period in which aftershock(s) follow(s) the main shock. As such, in some cases, measured acceleration waveform having different time period may be utilized between different steps.

Next, the central processor 55 of the server device 50 performs a frequency analysis on the "virtual displacement waveform data" (S32). Specifically, the central processor 55 of the server device 50 performs a wavelet transformation, which is an example of a frequency transformation, on the "virtual displacement waveform data" so that frequency-analyzed data that is processed through a frequency decomposition into plural ranks will be obtained. Next, the rank(s) other than the selected rank(s) in step S13, i.e. the rank(s) not utilized for generating an absolute acceleration waveform data or for generating an absolute displacement waveform data or for generating a performance curve, is(are) selected; and a displacement waveform data that is in accordance with the selected rank is generated (S33). In this specification, this is referred to as a "displacement waveform data of residual displacement" . The "displacement waveform of residual displacement" does not reflect the above-described main frequency band, but reflects the above-described minor frequency band.

All of the unselected ranks at step S 13 do not need to be reflected in the "displacement waveform of residual displacement" . In a case of Fig. 4, if the rank 4 only is selected as the main frequency band, then all of the ranks other than the rank 4 or a part of them may be reflected in the "displacement waveform of residual displacement" . Without intention to be limited, 50 % or more of ranks other than the rank 4 may preferably be reflected and 80% or more may be more preferably reflected, for example. The displacement values of the respective frequencies in a frequency band to be reflected may be added on the basis of time so that the "displacement waveform of residual displacement" can be generated.

An example of the generated displacement waveform by step S33 is shown in Fig. 6.

The idea of the "residual displacement" will be described later.

Next, the central processor 55 of the server device 50 corrects the "representative displacement waveform" determined at step S16 based on the "displacement waveform of residual displacement" determined at step S33 (S40). Typically, the central processor 55 of the server device 50 adds the value of the "displacement waveform of residual displacement" determined at step S33 to the displacement value of the "representative displacement waveform" determined at step S16 on the basis of time. Accordingly, the frequency components of the measured acceleration which are excluded when the representative acceleration waveform or representative displacement waveform is generated (which are typically lower frequency components) may be introduced; and the residual displacement remaining in the construction 200 can be reflected in the performance curve.

Next, the central processor 55 in the server device 50 may generate a performance curve based on the representative displacement waveform data corrected at step S40 and the representative acceleration waveform data determined at step S16 (S50). This step is similar to the above-described step S21, and thus detail descriptions will be omitted. In this specification, the performance curve calculated at step S50 may be referred to as a "performance curve for determination" . The performance curve for determination is shown as a determination curve L41 in Fig. 7. In Fig. 7, a performance curve L50 is illustrated which is generated based on real measurements of displacement and therefore which is of course not based on the double integral of acceleration.

Next, the central processor 55 of the server device 50 determines a seismic performance based on the performance curve for determination obtained at step S50 (S60). Commonly known methods for determining a seismic performance may be utilized and, for example determination may be made based on comparison between a performance curve and a requirement curve or based on a relative comparison between a performance curve and a marginal deformation point. The marginal deformation point may be obtainable from a specification of a construction 200 and so on. Therefore, the value of marginal deformation point may be stored in the storage 56 of the server device 50 in a readable manner before the determination. The value of marginal deformation point may be individually described in a program which is installed to the server device 50.

Just for precaution, a method for comparing the performance curve and the requirement curve will be explained with reference to Fig. 8. The "requirement curve" may have a vertical axis of acceleration response spectrum Ra of seismic wave at a reference point and a lateral axis of displacement response spectrum Rd of seismic wave at a reference point. Ra and Rd are determined based on an acceleration record measured by the terminal device 10n0, and are calculated at an attenuation constant of 5% for a common construction. It may be possible to calculate the "requirement curve" based on a measured seismic wave at a reference point (i.e. acceleration waveform data, displacement waveform data, and values input and stored in the server device 50 beforehand); and this calculation can be performed by the central processor 55 of the server device 50.

For example, as shown in Fig. 8, the central processor 55 of the server device 50 determines an expansion rate $\gamma$ which reflects an extent between a marginal point a-2 and an intersection at which a line coupling the origin and a marginal point a-2 intersects the requirement curve for aftershocks. The expansion rate $\gamma$ indicates that the suffered construction 200 can resist an earthquake which is $\gamma$ times greater than the main shock. For example, $\gamma<1.0$ may indicate that that construction may not be able to resist an earthquake which is equivalent to the main shock, and thus the central processor 55 may determine that the construction is in "danger". If $\gamma \geqq 1.0$, the processor 55 may determine that the construction is "safe". Assumed is an empirical rule that no aftershock greater than a main shock will occur. It should be noted that an intersection at which the requirement curve intersects the performance curve is a maximum response point for aftershocks.

Finally, referring to Figs. 9 to 11, "residual displacement" newly discovered by the present inventor will be described. Fig. 9 illustrates a displacement waveform based on an actual measurement of displacement which does not involve double integral and frequency analysis on acceleration. Fig. 10 illustrates a displacement waveform which is obtained by performing wavelet transformation on the displacement waveform shown in Fig. 9. It would be noticeable that around 5 cm displacement component has been eliminated by the frequency analysis. Fig. 11 shows a comparison between a performance curve L30 determined from the actually measured displacement waveform shown in Fig. 9 and acceleration waveform and a performance curve L31 that has been generated through wavelet transformation that is an example of frequency analysis. As shown in Fig. 11, the absolute value of acceleration at the maximum response point on the performance curve L31 pointed by a dotted circle is less than the absolute value of acceleration at the maximum response point on the performance curve L30 pointed by a dotted circle. As a result, there may be a risk that the maximum response point is underestimated and determination of "safe" may be finalized despite that determination of "danger" should be made.

In view of measurement errors of the acceleration sensors and various noise components added when a seismic wave occurs, it may be still effective to eliminate noise components by performing frequency analysis against the measured acceleration waveform. However, based on data of Figs. 9 to 11, some valuable frequency components are buried in a frequency band that has been considered as unnecessary, and therefore it would be better to manage to let that buried frequency components to be reflected in a performance curve.

In view of above, achieved by the present inventor are following steps: a performance curve is generated from a representative displacement and representative acceleration which reflect a main rank obtained by frequency analysis on measured waveform; this performance curve is simplified by a modelling; a measured seismic wave of fluctuating acceleration at a reference point is applied to that simplified model to generate a simplified displacement waveform; a displacement waveform is determined which reflects a rank that is other than the main rank and has been excluded when the representative displacement and the representative acceleration are determined for the "performance curve for modelling" ; this determined displacement waveform is utilized to correct the representative displacement waveform to generate a performance curve which allows more precise judgement.

As shown in Fig. 7, a performance curve L51 in which the residual displacement has been corrected by the method of this embodiment is substantially accorded with a performance curve L50 that is based on an actual measurement of displacement. The maximum response points are not positioned far with each other. Accordingly, precise determination may be performed.

<Second embodiment>

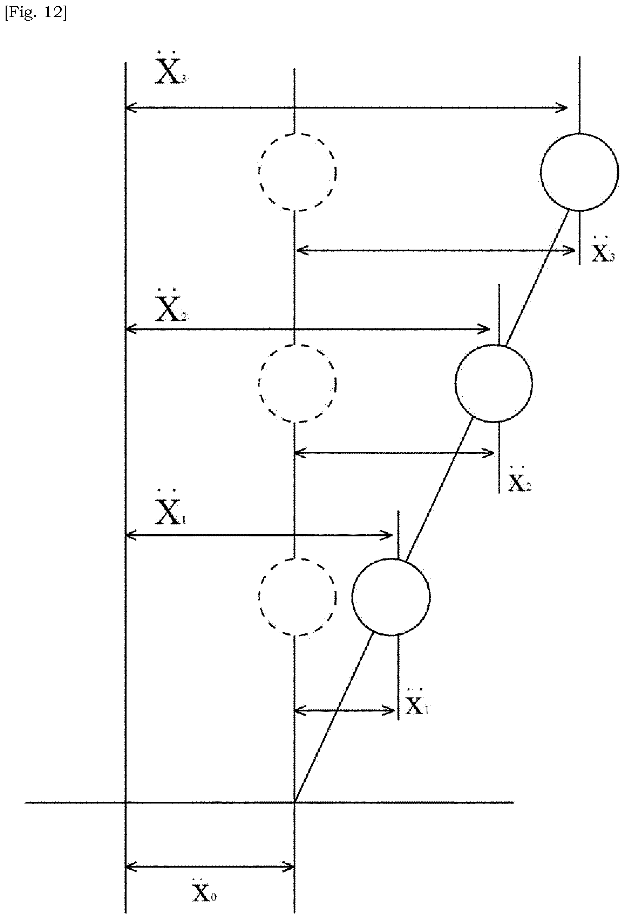

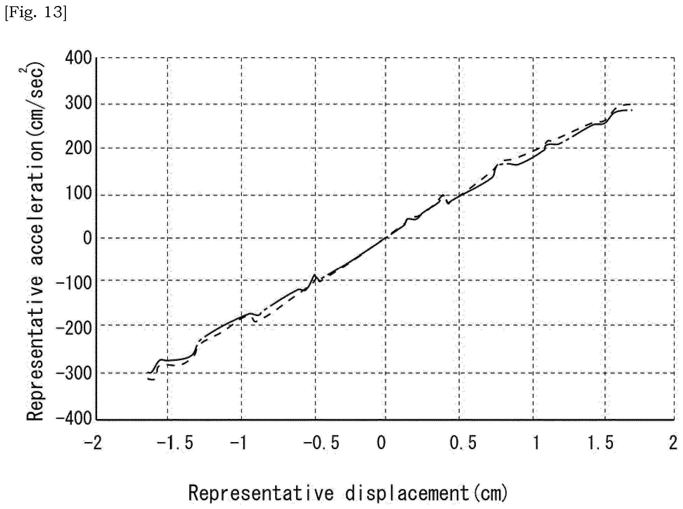

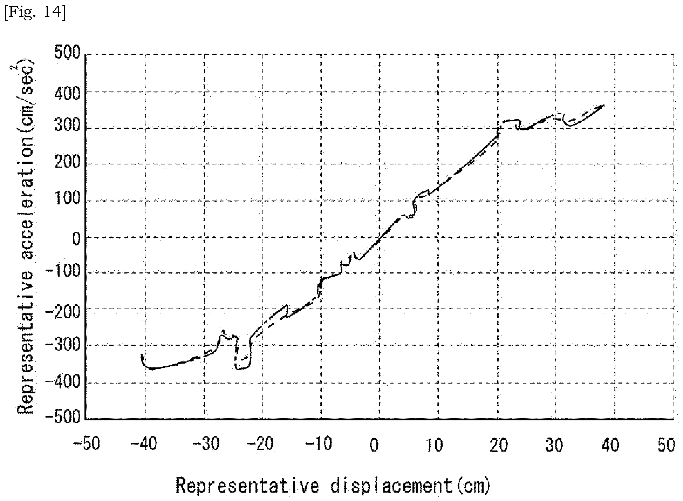

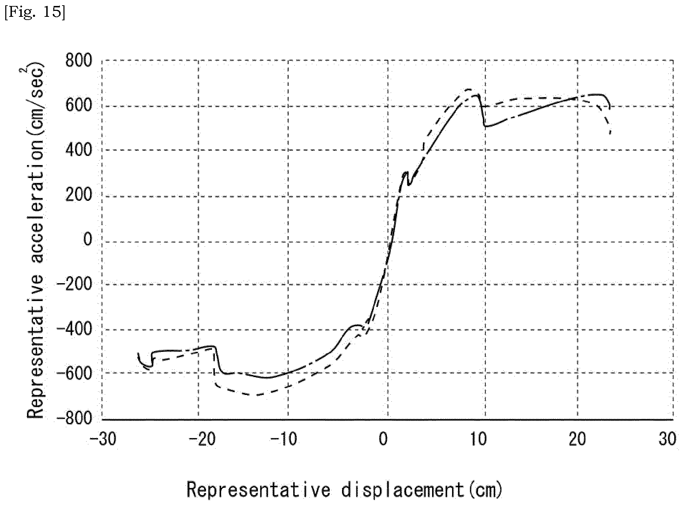

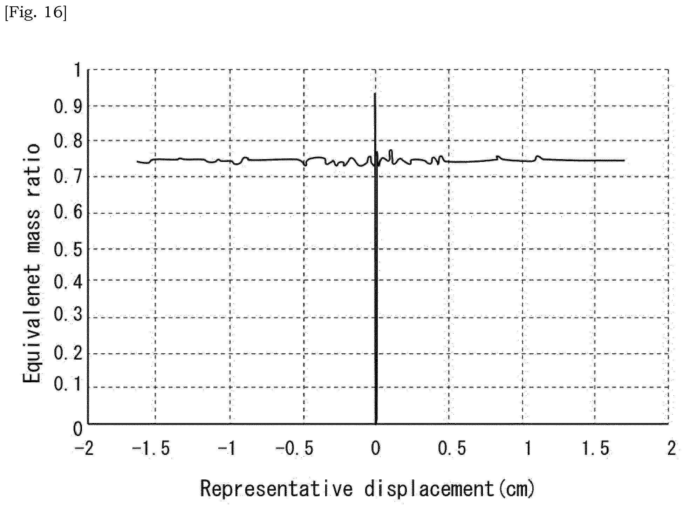

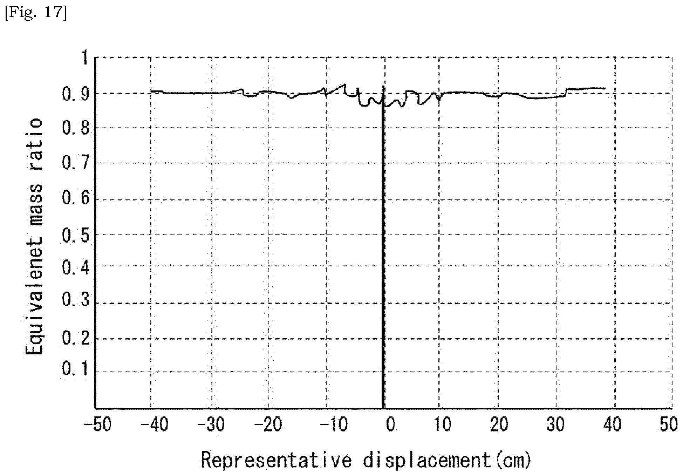

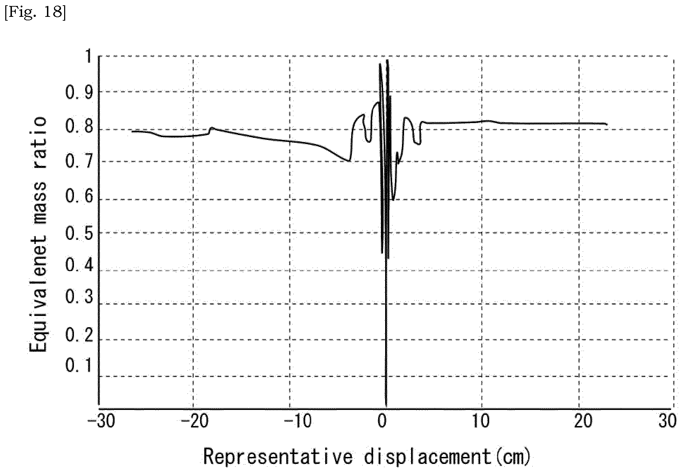

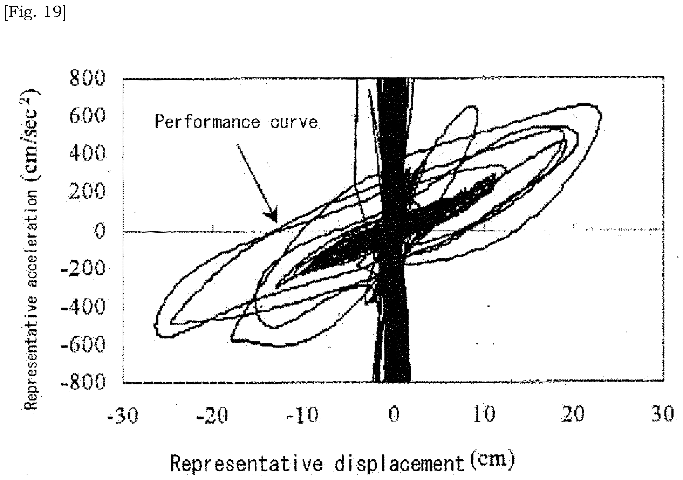

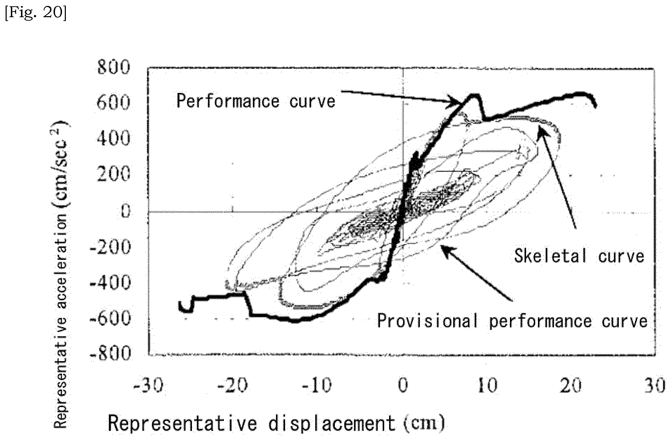

Second embodiment will be described with reference to Figs. 12 to 20. Fig. 12 is a diagram showing that a ground acceleration is included in a measured acceleration. Fig. 13 is a chart showing a performance curve with enhanced accuracy at a first test. Fig. 14 is a chart showing a performance curve with enhanced accuracy at a second test. Fig. 15 is a chart showing a performance curve with enhanced accuracy at a third test. Fig. 16 is a chart relating to the first test similarly to Fig. 13 and showing a relationship between a representative displacement and an equivalent mass ratio. Fig. 17 is a chart relating to the second test similarly to Fig. 14 and showing a relationship between a representative displacement and an equivalent mass ratio. Fig. 18 is a chart relating to the third test similarly to Fig. 15 and showing a relationship between a representative displacement and an equivalent mass ratio. Fig. 19 is a chart showing a performance curve calculated at a forth test and indicating that a region where a performance curve cannot be readily defined is included. Fig. 20 is a chart showing a meaningfully defined performance curve that is calculated at a forth test by an improved method.

The first embodiment describes an example in which the representative displacement Sd can be calculated by the mathematical formula of Math. 1 and the representative acceleration Sa can be calculated by the mathematical formula of Math. 2. This embodiment will show that mathematical formulas other than those used in the first embodiment will be used to calculate the representative acceleration Sa and the representative displacement Sd. Again, various mathematical formulas can be used for calculating a representative displacement Sd and representative acceleration Sa, and modifications and changes thereto are possible. In this embodiment, it is expected that more precise performance curve may be drawn compared to that of the first embodiment.

As clearly understandable from the mathematical formula of Math. 2, the representative acceleration Sa used as a basis for the performance curve may be calculated by assigning each absolute acceleration value of each floor into that mathematical formula. However, as would be understood from Fig. 12, the measured absolute acceleration value $\ddot{X}_1$ at $i^{th}$ floor of the construction includes an absolute acceleration value $\ddot{X}_0$ of ground movement. For example, the

absolute acceleration value $\ddot{X}_1$ at the 1st floor includes an absolute acceleration value $\ddot{X}_0$ of ground movement. The present inventor has discovered that this may possibly induce to lower the precision of performance curve, and the present inventor has introduced equivalent mass ratio for the calculations for the representative acceleration Sa and the representative displacement Sd. Accordingly, it is expected that more precise performance curve can be drawn. It should be noted that, in Fig. 12, $\ddot{X}_1 = \ddot{x}_1 + \ddot{x}_0$ is satisfied; $\ddot{X}_2 = \ddot{x}_2 + \ddot{x}_0$ is satisfied similarly; and $\ddot{X}_3 = \ddot{x}_3 + \ddot{x}_0$ is satisfied similarly. That is, at i${}^{th}$ floor, $\ddot{X}_1 = \ddot{x}_1 + \ddot{x}_0$ is satisfied.

The equivalent mass is a representative value of mass of construction in single material particle system, and may be given by a mathematical formula of Math. 3, for example.

[Math. 3]

$$ _rM = \frac{\left( \sum_{i=1}^{N} m_i \cdot {}_r g \cdot x_i \right)^2}{\sum_{i=1}^{N} m_i \cdot \left( {}_r g \cdot x_i \right)^2} $$

The equivalent mass ratio is a ratio of total value of mass of each floor of a construction having N${}^{th}$ floors against the equivalent mass, and may be given by a mathematical formula of Math. 4, for example.

[Math. 4]

$$ \text{Equivalent Mass Ratio} = \frac{_rM}{\sum_{i=1}^{N} m_i} $$

The representative acceleration Sa may be corrected in accordance with the equivalent mass ratio so that an appropriate correction can be made depending on whether the construction is a lower construction or a higher construction. For example, in a case where an inverse of the equivalent mass ratio is introduced as indicated by the following mathematical formulas of Math. 5 and Math. 7, greater correction can be given to the representative acceleration Sa in a case of a higher construction, and less correction can be given to the representative acceleration Sa in a case of a lower construction. The representative acceleration Sa can be more precisely determined equally for a variety of constructions from a lower one to higher one. The same holds true for the representative displacement Sd.

In this embodiment, the representative displacement Sd can be calculated, as an example, by following mathematical formula of Math. 5. In particular, a mathematical formula obtained by multiplying the mathematical formula of Math. 1 in the first embodiment by the inverse of the equivalent mass ratio may be utilized.

[Math. 5]

$$ Sd = \frac{\sum_{i=1}^{N} m_i \cdot {}_r g \cdot x_i}{\sum_{i=1}^{N} m_i} \times \frac{\sum_{i=1}^{N} m_i}{_rM} = \frac{\sum_{i=1}^{N} m_i \cdot \left( {}_r g \cdot x_i \right)^2}{\sum_{i=1}^{N} m_i \cdot {}_r g \cdot x_i} $$

where $m_i$ is a mass ratio at i${}^{th}$ floor against a mass ratio at ground floor (1st floor in Japan). i is a natural value equal to or greater than 1. $x_i$ is a displacement value at i${}^{th}$ floor, and ${}_r g \cdot x_i$ is a calculated value through a wavelet transformation.

The relationship of components in the mathematical formula of Math. 5 may be understandable in view of a mathematical formula of Math. 6.

[Math. 6]

$$\frac{\sum_{i=1}^{N} m_i \cdot {}_r g \cdot x_i}{\sum_{i=1}^{N} m_i} \times \frac{\sum_{i=1}^{N} m_i}{{}_r M} = \frac{\sum_{i=1}^{N} m_i \cdot \left({}_r g \cdot x_i\right)^2}{\left(\sum_{i=1}^{N} m_i \cdot {}_r g \cdot x_i\right)^2} \sum_{i=1}^{N} m_i \cdot {}_r g \cdot x_i = \frac{\sum_{i=1}^{N} m_i \cdot \left({}_r g \cdot x_i\right)^2}{\sum_{i=1}^{N} m_i \cdot {}_r g \cdot x_i}$$

In this embodiment, as an example, the representative acceleration Sa may be calculated by using a mathematical formula of Math. 7. This mathematical formula may be obtained by multiplying components other than ground movement components in the mathematical formula of Math. 2 in the first embodiment by the inverse of the equivalent mass ratio. Specifically, see mathematical formulas of Math. 8 to Math. 10.

[Math. 7]

$$Sa = \frac{\sum_{i=1}^{N} m_i \cdot \left({}_r g \cdot x_i\right)^2}{\left(\sum_{i=1}^{N} m_i \cdot {}_r g \cdot x_i\right)^2} \sum_{i=1}^{N} m_i \cdot {}_r g \cdot \ddot{x}_i + {}_r g \cdot \ddot{x}_0$$

where $m_i$ is a mass ratio at $i^{th}$ floor against a mass ratio at ground floor ($1^{st}$ floor in Japan). i is a natural value equal to or greater than 1. $\ddot{x}_0$ is a ground movement acceleration value, and $\ddot{x}_i$ is a measured acceleration value at $i^{th}$ floor. ${}_r g \cdot \ddot{x}_0$ and ${}_r g \cdot \ddot{x}_i$ are calculated values through a wavelet transformation. $x_i$ is a displacement value at $i^{th}$ floor, and ${}_r g \cdot x_i$ is a calculated value through a wavelet transformation.

As explained in relation to Fig. 12 and as indicated by a mathematical formula of Math. 8, a relative acceleration value $\ddot{x}_i$ at $i^{th}$ floor is equal to a value which is obtained by subtracting the absolute acceleration value $\ddot{x}_0$ of ground movement from the absolute acceleration value $\ddot{X}_1$ at $i^{th}$ floor. The absolute acceleration value $\ddot{X}_i$ at $i^{th}$ floor is a total value of the relative acceleration value $\ddot{x}_i$ at $i^{th}$ floor and the absolute acceleration value $\ddot{x}_0$ of ground movement. Therefore, the mathematical formula of Math. 2 in the first embodiment can be expressed by a mathematical formula of Math. 9. As shown in a mathematical formula of Math. 10, the mathematical formula of Math. 7 can be calculated by multiplying components other than ground movement components by the inverse of the equivalent mass ratio.

[Math. 8]

$$\ddot{x}_i = \ddot{X}_i - \ddot{x}_0$$

[Math. 9]

$$Sa = \frac{\sum_{i=1}^{N} m_i \cdot {}_r g \cdot \ddot{X}_i}{\sum_{i=1}^{N} m_i} = \frac{\sum_{i=1}^{N} m_i \cdot {}_r g \cdot \ddot{x}_i}{\sum_{i=1}^{N} m_i} + \frac{\sum_{i=1}^{N} m_i \cdot {}_r g \cdot \ddot{x}_0}{\sum_{i=1}^{N} m_i}$$

[Math. 10]

$$Sa = \frac{\sum_{i=1}^{N} m_i \cdot {}_r g \cdot \ddot{x}_i}{\sum_{i=1}^{N} m_i} \times \frac{\sum_{i=1}^{N} m_i}{{}_r M} + \frac{\sum_{i=1}^{N} m_i \cdot {}_r g \cdot \ddot{x}_0}{\sum_{i=1}^{N} m_i} =$$

$$\frac{\sum_{i=1}^{N} m_i \cdot \left( {}_r g \cdot x_i \right)^2}{\left( \sum_{i=1}^{N} m_i \cdot {}_r g \cdot x_i \right)^2} \sum_{i=1}^{N} m_i \cdot {}_r g \cdot \ddot{x}_i + {}_r g \cdot \ddot{x}_0$$

In this embodiment, the central processor 55 of the server device 50 may use the mathematical formulas of Math. 5 and Math. 7 to calculate and determine the representative acceleration waveform and representative displacement waveform.

Figs. 13 to 15 show an alternate long and short dashed line of a performance curve with enhanced accuracy in accordance with this embodiment, and a broken line of a performance curve of a reference example. The performance curve of the reference example is based on the Math. 1 and Math. 2 explained in the first embodiment, but it is further improved by performing a division of each point on the performance curve in accordance with the equivalent mass ratio at the positive and negative maximum response point (See Figs. 16 to 18). That is, the reference example results from that a concept of correction based on the equivalent mass ratio explained in this embodiment is introduced into the first embodiment. It should be noted that, in a case of the reference example, values of inverse of the equivalent mass ratio introduced into the mathematical formulas of Math. 1 and Math. 2 are set to be a constant value in an effort to simplify the calculation. On the other hand, in case of mathematical formulas of Math. 5 and Math. 7 according to this embodiment, the inverse of the equivalent mass ratio fluctuating along a time axis is introduced to the respective Math. 1 and Math. 2. The employed mathematical formula may be simplified as in the reference example so that calculation cost may be reduced. Various manner for introducing the equivalent mass ratio may be envisaged, and thus should not be limited to the instant disclosure of this specification. Fig. 16 illustrates a relationship between the representative displacement and an equivalent mass ratio in a case of Fig. 13. Fig. 17 illustrates a relationship between the representative displacement and an equivalent mass ratio in a case of Fig. 14. Fig. 18 illustrates a relationship between the representative displacement and an equivalent mass ratio in a case of Fig. 15. It should be noted that the performance curve in Fig. 13 reflects main ranks 4 to 6. The performance curve in Fig. 14 reflects main ranks 6 and 7. The performance curve in Fig. 15 reflects main ranks 6 to 9. Different ranks have been selected for calculating and determining a meaningful performance curve in accordance with each test.

The test sample used in Fig. 15 is a test sample of an experimental record of actual three-layered reinforced concrete structure on a shaking table which is conducted by National Research Institute for Earth Science and Disaster Prevention of Science and Technology Agency at 1993.

It should be noted that it has been confirmed that, in some cases, precise performance curves cannot be drawn even using the Math. 5 and Math. 7. In an actual testing performed by the present inventor in which a multi-layered reinforced concrete structure test sample is used, a meaningful performance curve cannot be drawn as the value of representative acceleration becomes extremely greater in a region where an absolute value of representative displacement is small as shown in Fig. 19. The cause of this may be as follows: at an actual measurement, the relative displacement at each layer may not be a distribution form, which is proportional to a first-order mode system, within a region where the response displacement is small, and a first-order equivalent mass may become an extremely small value.

In such a case, the following steps may be performed, for example and preferably, in order to draw a meaningful performance curve. First, the representative displacement Sd and representative acceleration Sa are determined using the Math. 1 and Math. 2 so that a performance curve may be calculated and determined. This step is similar to that explained in the first embodiment, and the calculated and determined performance curve may be referred to as a "provisional performance curve" . Next, "skeletal curve" is determined from the calculated and determined "provisional performance curve" . The "skeletal curve" is a response curve which links extracted points one by one which renew a maximum deformation during shaking in an earthquake. This process may be performable by the central processor 55 of the server device 50 which may use a program in which the above algorithm has been embedded. Next, the equivalent mass ratio for each point on the "skeletal curve" may be calculated and determined. This calculated and determined value may be used to divide components other than ground movement components of the representative acceleration value of the "provisional performance curve" and may be used to divide the representative displacement value. These processes may also be performable by the central processor 55 in the server device 50. As explained above, more precise performance curve may be drawn by taking the above explained bypass measure in a case where direct use of Math. 5 and Math. 7 is not appropriate. It could be said that, for either cases where Math. 5 and Math. 7 are used and not used, an acceleration value on the representative acceleration waveform used as a basis for the performance curve is a corrected value in accordance with the equivalent mass ratio.

Fig. 20 illustrates the "provisional performance curve" , "skeletal curve" and "performance curve" calculated and determined by above steps. In the performance curve in Fig. 20, influences of frequency bands of minor rank has been excluded therefrom through a wavelet transformation similar to the first embodiment. When calculating and determining the performance curve in Fig. 20, the central processor 55 may perform the step S40 described in the first embodiment and, in some cases, may not perform the step S40. That is, an embodiment is envisaged where the representative displacement is not corrected by residual displacement when calculating and determining the performance curve in Fig. 20. In light of this understanding, the feature described in this embodiment (a process for dividing, by the use of equivalent mass ratio, components other than ground movement components of representative acceleration value, and representative displacement value) may be recognizable separately to a correction of representative displacement by a residual displacement.

That is, the instant specification includes an invention which may be identified as follows, for example.

A method for calculating a performance curve, comprising:

a step of performing, for a floor of a construction, a calculation of an absolute acceleration waveform that, based on frequency analysis of measured acceleration waveform of a seismic wave, reflects a determined frequency band of the measured acceleration waveform and does not reflect a frequency band other than the determined frequency band;
a step of calculating a representative acceleration waveform that represents one or more absolute acceleration waveforms for the floors of the construction;
a step of performing, for each floor of the construction, a calculation of an absolute displacement waveform through integral of acceleration value of an absolute acceleration waveform;
a step of calculating a relative displacement waveform for each floor by subtracting an absolute displacement waveform at a reference point from the absolute displacement waveform at each floor of the construction;
a step of calculating a representative displacement waveform that represents the relative displacement waveforms for the floors; and
a step of determining a performance curve based on the representative displacement waveform and the representative acceleration waveform, wherein
said calculating of the representative acceleration waveform comprises a processing to correct the acceleration values of the representative acceleration waveform in accordance with an equivalent mass ratio, and wherein
said calculating of the representative displacement waveform comprises a processing to correct the displacement values of the representative displacement waveform in accordance with an equivalent mass ratio.

A computer configured to perform the steps of:

performing, for a floor of a construction, a calculation of an absolute acceleration waveform that, based on frequency analysis of measured acceleration waveform of a seismic wave, reflects a determined frequency band of the measured acceleration waveform and does not reflect a frequency band other than the determined frequency band;
calculating a representative acceleration waveform that represents one or more absolute acceleration waveforms for the floors of the construction;
performing, for each floor of the construction, a calculation of an absolute displacement waveform through integral of acceleration value of an absolute acceleration waveform;
calculating a relative displacement waveform for each floor by subtracting an absolute displacement waveform at a reference point from the absolute displacement waveform at each floor of the construction;
calculating a representative displacement waveform that represents the relative displacement waveforms for the floors; and
determining a performance curve based on the representative displacement waveform and the representative acceleration waveform, wherein
said calculating of the representative acceleration waveform comprises a processing to correct the acceleration values of the representative acceleration waveform in accordance with an equivalent mass ratio, and wherein
said calculating of the representative displacement waveform comprises a processing to correct the displacement values of the representative displacement waveform in accordance with an equivalent mass ratio.

A program configured to instruct a computer to perform the steps of:

performing, for a floor of a construction, a calculation of an absolute acceleration waveform that, based on frequency analysis of measured acceleration waveform of a seismic wave, reflects a determined frequency band of the measured acceleration waveform and does not reflect a frequency band other than the determined frequency band;

calculating a representative acceleration waveform that represents one or more absolute acceleration waveforms for the floors of the construction;

performing, for each floor of the construction, a calculation of an absolute displacement waveform through integral of acceleration value of an absolute acceleration waveform;

calculating a relative displacement waveform for each floor by subtracting an absolute displacement waveform at a reference point from the absolute displacement waveform at each floor of the construction;

calculating a representative displacement waveform that represents the relative displacement waveforms for the floors; and

determining a performance curve based on the representative displacement waveform and the representative acceleration waveform, wherein said calculating of the representative acceleration waveform comprises a processing to correct the acceleration values of the representative acceleration waveform in accordance with an equivalent mass ratio, and wherein

said calculating of the representative displacement waveform comprises a processing to correct the displacement values of the representative displacement waveform in accordance with an equivalent mass ratio.

As apparent from above descriptions, program may be installed in the terminal devices 10 and the server device 50 which instructs a processing unit, such as CPU and so on to perform the steps shown in Fig. 3. This program may be stored on any non-transitory information storage medium, and may be stored on any kind of information storage mediums such as an optical recording medium including CDs and DVDs and so on, a magnetic recording medium such as MDs and so on, hard disks, and memories and so on.

It may be preferably that, assuming a system trouble may happen, the terminal devices 10 store measured values or processed values for each floor so that ex-post evaluation can be performed even not a real-time evaluation. It should be noted that a system configuration policy may be adoptable in which burden of processing may be concentrated to the server and burden of processing may not be concentrated or no such burden may be allocated to the terminal device. In this case, different configuration than that shown in Fig. 2 may be adopted.

In some embodiments, a computer functioning as a client computer, i.e. the terminal device 10, or a server device 50 may include a storage such as a memory and so on and a processing unit such as a CPU (Central Processing Unit) and so on so that it can perform various processing. Therefore, it is envisaged that other functionalities may be added to the terminal device 10 and server device 50 or the instantly disclosed functionalities may additionally be allocated to any existing computer. The terminal device is named for the sake of convenience in relation to the server that intensively performs processing.

In view of the above teachings, the skilled person in the art may add various modifications to the respective embodiments. Any manner for determining will be employed. In the instant specification, in some cases, the term of "data" may be used in light of processing by a computer. However, from a stand point of a simple method, such term may be ignored to simply understand the descriptions regarding "the acceleration waveform" or "the displacement waveform" . In this specification, the term of swing or waveform may be referred in some cases to indicate a fluctuation of value along a time axis. However, from a standpoint of information, it can be recognizable as a group or data of values arranged along a time axis.

It should be understood that steps pointed out in Claim may be randomly ordered unless the order is clearly defined in Claim. A part of step to be performed by a computer may alternatively be performed by a human. In an embodiment, despite an introduction of human assisted step, there is no change with respect to a computer-based-processing as a whole. The generated data may be stored at any location in a system, and there is no need to store them on the same chip or the same computer.

[Reference Signs List]

100    Seismic performance evaluation system
10    Terminal device
50    Server device

**Claims**

1. A method of correcting a representative displacement waveform, comprising:

   a step (S21) of determining a performance curve (L40) that is configured, based on frequency analysis of measured acceleration waveform of a seismic wave, to reflect a determined frequency band of the measured acceleration waveform and not to reflect a frequency band other than the determined frequency band, wherein the performance curve is a curve in a coordinate system having a first axis (Sd) of representative displacement and a second axis (Sa), vertical to the first axis, of representative acceleration, each point on the curve providing a value of a representative displacement waveform and a value at the same time of a representative acceleration waveform; and
   a step (S22) of determining an approximation formula (L41) approximating the performance curve;
   **characterized in that** the method of correcting a representative displacement waveform further comprises:

   a step (S31) of determining a virtual displacement waveform by applying the measured acceleration waveform of the seismic wave to the approximation formula;
   a step (S32,S33) of determining, through frequency analysis of the virtual displacement waveform, a displacement waveform for correction which reflects at least partially the frequency band other than the determined frequency band; and
   a step (S40) of correcting, in accordance with the displacement waveform for correction, the representative displacement waveform used as a basis for said performance curve (L40).

2. The method of correcting a representative displacement waveform of Claim 1, further comprising:

   a step (S16) of calculating the representative acceleration waveform used as a basis for said performance curve, wherein this step comprises:

   a first step (S 13) of performing, for each floor of a construction (100), a calculation of an absolute acceleration waveform that reflects the determined frequency band and does not reflect the frequency band other than the determined frequency band based on frequency analysis of measured acceleration waveform of a seismic wave; and
   a second step (S16) of calculating the representative acceleration waveform that represents the absolute acceleration waveforms of the floors of the construction (100).

3. The method of correcting a representative displacement waveform of Claim 2 in which the frequency analysis comprises performing wavelet transformation and selecting ranks, wherein
   ranks selected during the frequency analysis in the step for determining the displacement waveform for correction do not include ranks selected during the frequency analysis in the first step (S 13) in the step (S16) of calculating the representative acceleration waveform.

4. The method of correcting a representative displacement waveform of Claim 3, wherein
   a rank including a frequency having the greatest maximum amplitude compared to other maximum amplitudes of other frequencies is included in the ranks selected during the frequency analysis in the first step (S 13) in the step (S16) of calculating the representative acceleration waveform.

5. The method of correcting a representative displacement waveform of any one of Claims 2 to 4, wherein
   an acceleration value of the representative acceleration waveform is a corrected value in accordance with an equivalent mass ratio.

6. The method of correcting a representative displacement waveform of any one of Claims 2 to 5, further comprising:

   a step (S16) of determining the representative displacement waveform used as a basis for said performance curve, wherein this step comprises:

   a step (S13) of performing, for each floor in the construction (100), a calculation of an absolute displacement waveform through integral of acceleration value of an absolute acceleration waveform;
   a step (S15) of calculating a relative displacement waveform for each floor by subtracting an absolute displacement waveform at a reference point from the absolute displacement waveform at each floor of the construction (100); and
a step (S16) of calculating a representative displacement waveform that represents the relative displacement waveforms for the floors.

**7.** A method of evaluating residual seismic performance of a construction (100) based on the representative displacement waveform that is corrected by the method of any one of claims 1 to 6.

**8.** A method of evaluating residual seismic performance of a construction (100) by the use of a performance curve that is determined from the representative displacement waveform corrected by a method of any one of claims 1 to 6 and the representative acceleration waveform.

**9.** A computer configured to perform the steps of:

determining (S21) a performance curve (L40) that is configured, based on frequency analysis of measured acceleration waveform of a seismic wave, to reflect a determined frequency band of the measured acceleration waveform and not to reflect a frequency band other than the determined frequency band, wherein the performance curve is a curve in a coordinate system having a first axis (Sd) of representative displacement and a second axis (Sa), vertical to the first axis, of representative acceleration, each point on the curve providing a value of a representative displacement waveform and a value at the same time of a representative acceleration waveform; and
determining (S22) an approximation formula (L41) approximating the performance curve;
**characterized in that** the computer is further configured to perform the steps of:

determining (S31) a virtual displacement waveform by applying the measured acceleration waveform of the seismic wave to the approximation formula;
determining (S32, S33), through frequency analysis of the virtual displacement waveform, a displacement waveform for correction which reflects at least partially the frequency band other than the determined frequency band; and
correcting (S40), in accordance with the displacement waveform for correction, the representative displacement waveform used as a basis for said performance curve (L40).

**10.** A program configured to instruct a computer to perform the steps of:

determining (S21) a performance curve (L40) that is configured, based on frequency analysis of measured acceleration waveform of a seismic wave, to reflect a determined frequency band of the measured acceleration waveform and not to reflect a frequency band other than the determined frequency band, wherein the performance curve is a curve in a coordinate system having a first axis (Sd) of representative displacement and a second axis (Sa), vertical to the first axis, of representative acceleration, each point on the curve providing a value of a representative displacement waveform and a value at the same time of a representative acceleration waveform;
determining (S22) an approximation formula (L41) approximating the performance curve;
determining (S31) a virtual displacement waveform by applying the measured acceleration waveform of the seismic wave to the approximation formula;
determining (S32, S33), through frequency analysis of the virtual displacement waveform, a displacement waveform for correction which reflects at least partially the frequency band other than the determined frequency band; and
correcting (S40), in accordance with the displacement waveform for correction, the representative displacement waveform used as a basis for said performance curve (L40).

**11.** An information storage medium in which the program of Claim 10 is stored in a readable manner.

**12.** A method of evaluating residual seismic performance of a construction (100), comprising:

a step (S13) of performing, for each floor of a construction (100), a calculation of an absolute acceleration waveform that, based on frequency analysis of measured acceleration waveform of a seismic wave, reflects a determined frequency band of the measured acceleration waveform and does not reflect a frequency band other than the determined frequency band;
a step (S16) of calculating a representative acceleration waveform that represents one or more absolute acceleration waveforms for the floors of the construction (100);

a step (S13) of performing, for each floor of the construction (100), a calculation of an absolute displacement waveform through integral of acceleration values of the absolute acceleration waveform;

a step (S15) of calculating a relative displacement waveform for each floor by subtracting an absolute displacement waveform at a reference point from the absolute displacement waveform at each floor of the construction (100);

a step (S16) of calculating a representative displacement waveform that represents the relative displacement waveforms for the floors;

a step of correcting the representative displacement waveform according to Claim 1, wherein the performance curve is determined based on the representative displacement waveform and the representative acceleration waveform; and

a step (S50) of determining a performance curve based on the representative displacement waveform corrected by the displacement waveform for correction and the representative acceleration waveform, and evaluating residual seismic performance of the construction (100) based on that determined performance curve.

**13.** A seismic performance evaluation system configured to perform:

a step of performing (S 13), for each floor of a construction (100), a calculation of an absolute acceleration waveform that is configured, based on frequency analysis of measured acceleration waveform of a seismic wave, to reflect a determined frequency band of the measured acceleration waveform and not to reflect a frequency band other than the determined frequency band;

a step of calculating (S16) a representative acceleration waveform that represents one or more absolute acceleration waveforms of the floors of the construction (100);

a step of performing (S13), for each floor of the construction (100), a calculation of an absolute displacement waveform through integral of acceleration value of an absolute acceleration waveform;

a step of calculating (S15) a relative displacement waveform for each floor by subtracting an absolute displacement waveform at a reference point from the absolute displacement waveform at each floor of the construction (100);

a step of calculating (S16) a representative displacement waveform that represents the relative displacement waveforms for the floors; further comprising the steps of:

determining (S21) a performance curve (L40) that is configured, based on frequency analysis of measured acceleration waveform of a seismic wave, to reflect a determined frequency band of the measured acceleration waveform and not to reflect a frequency band other than the determined frequency band, wherein the performance curve is a curve in a coordinate system having a first axis (Sd) of representative displacement and a second axis (Sa), vertical to the first axis, of representative acceleration, each point on the curve providing a value of a representative displacement waveform and a value at the same time of a representative acceleration waveform;

determining (S22) an approximation formula (L41) approximating the performance curve;

determining (S31) a virtual displacement waveform by applying the measured acceleration waveform of the seismic wave to the approximation formula;

determining (S32, S33), through frequency analysis of the virtual displacement waveform, a displacement waveform for correction which reflects at least partially the frequency band other than the determined frequency band; and

correcting (S40), in accordance with the displacement waveform for correction, the representative displacement waveform used as a basis for said performance curve (L40),

wherein the performance curve is determined based on the representative displacement waveform and the representative acceleration waveform; and

a step of determining (S50) a performance curve based on the representative displacement waveform corrected by the displacement waveform for correction and the representative acceleration waveform, and evaluating residual seismic performance of a construction (100) based on that determined performance curve.

**Patentansprüche**

**1.** Verfahren zur Korrektur einer repräsentativen Verschiebungswellenform, umfassend:

einen Schritt (S21) des Bestimmens einer Leistungskurve (L40), die konfiguriert ist, auf Basis einer Frequenzanalyse einer gemessenen Beschleunigungswellenform einer seismischen Welle ein bestimmtes Frequenzband der gemessenen Beschleunigungswellenform zu reflektieren, und ein von dem bestimmten Frequenzband sich unterscheidendes Frequenzband nicht zu reflektieren, worin die Leistungskurve eine Kurve in einem Koordinatensystem ist, das eine erste Achse (Sd) einer repräsentativen Verschiebung und eine zur ersten Achse vertikale, zweite Achse (Sa) einer repräsentativen Beschleunigung aufweist, wobei jeder Punkt auf der Kurve einen Wert einer repräsentativen Verschiebungswellenform und zugleich einen Wert einer repräsentativen Beschleunigungswellenform bereitstellt; und

einen Schritt (S22) des Bestimmens einer Näherungsformel (L41), die einer Näherung der Leistungskurve entspricht;

**dadurch gekennzeichnet, dass** das Verfahren zur Korrektur einer repräsentativen Verschiebungswellenform ferner Folgendes umfasst:

einen Schritt (S31) des Bestimmens einer virtuellen Verschiebungswellenform durch Anwenden der gemessenen Beschleunigungswellenform der seismischen Welle auf die Näherungsformel;

einen Schritt (S32, S33) des Bestimmens, durch eine Frequenzanalyse der virtuellen Verschiebungswellenform, einer Verschiebungswellenform zur Korrektur, die zumindest teilweise das Frequenzband, das sich vom bestimmten Frequenzband unterscheidet, reflektiert; und

einen Schritt (S40) des Korrigierens, gemäß der Verschiebungswellenform zur Korrektur, der repräsentativen Verschiebungswellenform, die als eine Basis für die Leistungskurve (L40) herangezogen wird.

2. Verfahren zur Korrektur einer repräsentativen Verschiebungswellenform nach Anspruch 1, ferner umfassend:

einen Schritt (S16) des Berechnens der repräsentativen Beschleunigungswellenform, die als eine Basis für die Leistungskurve herangezogen wird, worin dieser Schritt Folgendes umfasst:

einen ersten Schritt (S13) des Ausführens, für jede Bodenfläche einer Konstruktion (100), einer Berechnung einer absoluten Beschleunigungswellenform, die das bestimmte Frequenzband reflektiert, und dasjenige Frequenzband, das sich vom bestimmten Frequenzband auf Basis einer Frequenzanalyse einer gemessenen Beschleunigungswellenform einer seismischen Welle unterscheidet, nicht reflektiert; und

einen zweiten Schritt (S16) des Berechnens der repräsentativen Beschleunigungswellenform, welche die absoluten Beschleunigungswellenformen der Bodenflächen der Konstruktion (100) darstellt.

3. Verfahren zur Korrektur einer repräsentativen Verschiebungswellenform nach Anspruch 2, worin die Frequenzanalyse das Ausführen einer Wavelet-Transformation und das Auswählen von Rängen umfasst, worin die während der Frequenzanalyse im Schritt für das Bestimmen der Verschiebungswellenform zur Korrektur ausgewählten Ränge die während der Frequenzanalyse im ersten Schritt (S13) im Schritt (S16) des Berechnens der repräsentativen Beschleunigungswellenform ausgewählten Ränge nicht umfassen.

4. Verfahren zur Korrektur einer repräsentativen Verschiebungswellenform nach Anspruch 3, worin ein Rang, der eine Frequenz mit der größten Maximalamplitude im Vergleich zu anderen Maximalamplituden anderer Frequenzen umfasst, in den während der Frequenzanalyse im ersten Schritte (S13) im Schritt (S16) des Berechnens der repräsentativen Beschleunigungswellenform ausgewählten Rängen enthalten ist.

5. Verfahren zur Korrektur einer repräsentativen Verschiebungswellenform nach einem der Ansprüche 2 bis 4, worin ein Beschleunigungswert der repräsentativen Beschleunigungswellenform ein korrigierter Wert in Übereinstimmung mit einem äquivalenten Masseverhältnis ist.

6. Verfahren zur Korrektur einer repräsentativen Verschiebungswellenform nach einem der Ansprüche 2 bis 5, ferner umfassend:

einen Schritt (S16) des Bestimmens der repräsentativen Verschiebungswellenform, die als eine Basis für die Leistungskurve herangezogen wird, worin dieser Schritt Folgendes umfasst:

einen Schritt (S13) des Ausführens, für jede Bodenfläche in der Konstruktion (100), einer Berechnung einer absoluten Verschiebungswellenform durch ein Integral des Beschleunigungswerts einer absoluten Beschleunigungswellenform;

einen Schritt (S15) des Berechnens einer relativen Verschiebungswellenform für jede Bodenfläche durch Subtrahieren einer absoluten Verschiebungswellenform an einem Bezugspunkt von der absoluten Verschiebungswellenform an jeder Bodenfläche der Konstruktion (100); und

einen Schritt (S16) des Berechnens einer repräsentativen Verschiebungswellenform, welche die relativen Verschiebungswellenformen für die Bodenflächen darstellt.

7. Verfahren zur Evaluierung des restlichen seismischen Leistungsverhaltens einer Konstruktion (100) auf Basis der repräsentativen Verschiebungswellenform, welche durch das Verfahren nach einem der Ansprüche 1 bis 6 korrigiert wird.

8. Verfahren zur Evaluierung des restlichen seismischen Leistungsverhaltens einer Konstruktion (100) durch die Anwendung einer Leistungskurve, die von der repräsentativen Verschiebungswellenform, die durch ein Verfahren nach einem der Ansprüche 1 bis 6 korrigiert wird, und der repräsentativen Beschleunigungswellenform bestimmt wird.

9. Computer, der konfiguriert ist, die folgenden Schritte auszuführen:

Bestimmen (S21) einer Leistungskurve (L40), die auf Basis der Frequenzanalyse einer gemessenen Beschleunigungswellenform einer seismischen Welle so konfiguriert ist, dass sie ein bestimmtes Frequenzband der gemessenen Beschleunigungswellenform reflektiert, und ein von dem bestimmten Frequenzband sich unterscheidendes Frequenzband nicht reflektiert, worin die Leistungskurve eine Kurve in einem Koordinatensystem ist, das eine erste Achse (Sd) einer repräsentativen Verschiebung und eine zur ersten Achse vertikale, zweite Achse (Sa) einer repräsentativen Beschleunigung aufweist, wobei jeder Punkt auf der Kurve einen Wert einer repräsentativen Verschiebungswellenform und gleichzeitig einen Wert einer repräsentativen Beschleunigungswellenform bereitstellt; und

Bestimmen (S22) einer Näherungsformel (L41), die einer Näherung der Leistungskurve entspricht;

**dadurch gekennzeichnet, dass** der Computer ferner konfiguriert ist, die folgenden Schritte auszuführen:

Bestimmen (S31) einer virtuellen Verschiebungswellenform durch Anwenden der gemessenen Beschleunigungswellenform der seismischen Welle auf die Näherungsformel;

Bestimmen (S32, S33), durch eine Frequenzanalyse der virtuellen Verschiebungswellenform, einer Verschiebungswellenform zur Korrektur, die zumindest teilweise das von dem bestimmten Frequenzband sich unterscheidende Frequenzband reflektiert; und

Korrigieren (S40), in Übereinstimmung mit der Verschiebungswellenform zur Korrektur, der repräsentativen Verschiebungswellenform, die als eine Basis für die Leistungskurve (L40) herangezogen wird.

10. Programm, das konfiguriert ist, einen Computer anzuweisen, die folgenden Schritte auszuführen:

Bestimmen (S21) einer Leistungskurve (L40) auf Basis der Frequenzanalyse der gemessenen Beschleunigungswellenform einer seismischen Welle, um ein bestimmtes Frequenzband der gemessenen Beschleunigungswellenform zu reflektieren, und ein von dem bestimmten Frequenzband sich unterscheidendes Frequenzband nicht zu reflektieren, worin die Leistungskurve eine Kurve in einem Koordinatensystem ist, das eine erste Achse (Sd) einer repräsentativen Verschiebung und eine zur ersten Achse vertikale, zweite Achse (Sa) einer repräsentativen Beschleunigung aufweist, wobei jeder Punkt auf der Kurve einen Wert einer repräsentativen Verschiebungswellenform und gleichzeitig einen Wert einer repräsentativen Beschleunigungswellenform bereitstellt;

Bestimmen (S22) einer Näherungsformel (L41), die einer Näherung der Leistungskurve entspricht;

Bestimmen (S31) einer virtuellen Verschiebungswellenform durch Anwenden der gemessenen Beschleunigungswellenform der seismischen Welle auf die Näherungsformel;

Bestimmen (S32, S33), durch eine Frequenzanalyse der virtuellen Verschiebungswellenform, einer Verschiebungswellenform zur Korrektur, die zumindest teilweise das von dem bestimmten Frequenzband sich unterscheidende Frequenzband reflektiert; und

Korrigieren (S40), in Übereinstimmung mit der Verschiebungswellenform zur Korrektur, der repräsentativen Verschiebungswellenform, die als eine Basis für die Leistungskurve (L40) herangezogen wird.

11. Informationsspeichermedium, in dem das Programm von Anspruch 10 lesbar gespeichert ist.

12. Verfahren zur Evaluierung des restlichen seismischen Leistungsverhaltens einer Konstruktion (100), umfassend:

einen Schritt (S13) des Ausführens, für jede Bodenfläche einer Konstruktion (100), einer Berechnung einer absoluten Beschleunigungswellenform, die auf Basis der Frequenzanalyse einer gemessenen Beschleunigungswellenform einer seismischen Welle ein bestimmtes Frequenzband der gemessenen Beschleunigungswellenform reflektiert, und ein von dem bestimmten Frequenzband sich unterscheidendes Frequenzband nicht reflektiert;

einen Schritt (S16) des Berechnens einer repräsentativen Beschleunigungswellenform, die eine oder mehrere absolute Beschleunigungswellenformen für die Bodenflächen der Konstruktion (100) darstellt;

einen Schritt (S13) des Ausführens, für jede Bodenfläche der Konstruktion (100), einer Berechnung einer absoluten Verschiebungswellenform durch ein Integral von Beschleunigungswerten der absoluten Beschleunigungswellenform;

einen Schritt (S15) des Berechnens einer relativen Verschiebungswellenform für jede Bodenfläche durch Subtrahieren einer absoluten Verschiebungswellenform an einem Bezugspunkt von der absoluten Verschiebungswellenform an jeder Bodenfläche der Konstruktion (100);

einen Schritt (S16) des Berechnens einer repräsentativen Verschiebungswellenform, welche die relativen Verschiebungswellenformen für die Bodenflächen darstellt;

einen Schritt des Korrigierens der repräsentativen Verschiebungswellenform gemäß Anspruch 1, worin die Leistungskurve auf Basis der repräsentativen Verschiebungswellenform und der repräsentativen Beschleunigungswellenform bestimmt wird; und

einen Schritt (S50) des Bestimmens einer Leistungskurve auf Basis der repräsentativen Verschiebungswellenform, die durch die Verschiebungswellenform zur Korrektur korrigiert wird, und der repräsentativen Beschleunigungswellenform, und des Evaluierens des restlichen seismischen Leistungsverhaltens der Konstruktion (100) auf Basis dieser bestimmten Leistungskurve.

13. Evaluierungssystem für seismisches Leistungsverhalten, das konfiguriert ist, Folgendes auszuführen:

einen Schritt des Ausführens (S13), für jede Bodenfläche einer Konstruktion (100), einer Berechnung einer absoluten Beschleunigungswellenform, die auf Basis der Frequenzanalyse einer gemessenen Beschleunigungswellenform einer seismischen Welle konfiguriert ist, ein bestimmtes Frequenzband der gemessenen Beschleunigungswellenform zu reflektieren, und ein von dem bestimmten Frequenzband sich unterscheidendes Frequenzband nicht zu reflektieren;

einen Schritt des Berechnens (S16) einer repräsentativen Beschleunigungswellenform, die eine oder mehrere absolute Beschleunigungswellenformen der Bodenflächen der Konstruktion (100) darstellt;

einen Schritt des Ausführens (S13), für jede Bodenfläche der Konstruktion (100), einer Berechnung einer absoluten Verschiebungswellenform durch ein Integral eines Beschleunigungswertes einer absoluten Beschleunigungswellenform;

einen Schritt des Berechnens (S15) einer relativen Verschiebungswellenform für jede Bodenfläche durch Subtrahieren einer absoluten Verschiebungswellenform an einem Bezugspunkt von der absoluten Verschiebungswellenform an jeder Bodenfläche der Konstruktion (100);

einen Schritt des Berechnens (S16) einer repräsentativen Verschiebungswellenform, welche die relativen Verschiebungswellenformen für die Bodenflächen darstellt;

wobei ferner folgende Schritte umfasst sind:

Bestimmen (S21) einer Leistungskurve (L40), die auf Basis der Frequenzanalyse einer gemessenen Beschleunigungswellenform einer seismischen Welle konfiguriert ist, ein bestimmtes Frequenzband der gemessenen Beschleunigungswellenform zu reflektieren, und ein von dem bestimmten Frequenzband sich unterscheidendes Frequenzband nicht zu reflektieren, worin die Leistungskurve ein Kurve in einem Koordinatensystem ist, das eine erste Achse (Sd) einer repräsentativen Verschiebung und eine zur ersten Achse vertikale, zweite Achse (Sa) einer repräsentativen Beschleunigung aufweist, wobei jeder Punkt auf der Kurve einen Wert einer repräsentativen Verschiebungswellenform und zugleich einen Wert einer repräsentativen Beschleunigungswellenform bereitstellt;

Bestimmen (S22) einer Näherungsformel (L41), die einer Näherung der Leistungskurve entspricht;

Bestimmen (S31) einer virtuellen Verschiebungswellenform durch Anwenden der gemessenen Beschleunigungswellenform der seismischen Welle auf die Näherungsformel;

Bestimmen (S32, S33), durch die Frequenzanalyse der virtuellen Verschiebungswellenform, einer Verschiebungswellenform zur Korrektur, die zumindest teilweise das von dem bestimmten Frequenzband sich unterscheidende Frequenzband reflektiert; und

Korrigieren (S40), in Übereinstimmung mit der Verschiebungswellenform zur Korrektur, der repräsentativen Verschiebungswellenform, die als Basis für die Leistungskurve (L40) herangezogen wird,

worin die Leistungskurve auf Basis der repräsentativen Verschiebungswellenform und der repräsentativen Beschleunigungswellenform bestimmt wird; und

einen Schritt des Bestimmens (S50) einer Leistungskurve auf Basis der repräsentativen Verschiebungswellenform, die durch die Verschiebungswellenform zur Korrektur korrigiert wird, und der repräsentativen Beschleunigungswellenform, und des Evaluierens des restlichen seismischen Leistungsverhaltens einer Konstruktion (100) auf Basis dieser bestimmten Leistungskurve.

**Revendications**

1. Procédé de correction d'une forme d'onde de déplacement représentatif, comprenant :

   une étape (S21) de détermination d'une courbe de performance (L40) qui est configurée, sur la base d'une analyse fréquentielle d'une forme d'onde d'accélération mesurée d'une onde sismique, afin de refléter une bande de fréquences déterminée de la forme d'onde d'accélération mesurée et ne pas refléter une bande de fréquences autre que la bande de fréquences déterminée, dans laquelle la courbe de performance est une courbe dans un système de coordonnées ayant un premier axe (Sd) de déplacement représentatif et un second axe (Sa), vertical par rapport au premier axe, d'accélération représentative, chaque point sur la courbe fournissant une valeur d'une forme d'onde de déplacement représentatif et une valeur au même moment d'une forme d'onde d'accélération représentative ; et

   une étape (S22) de détermination d'une formule d'approximation (L41) qui s'approche de la courbe de performance ;
   **caractérisé en ce que** le procédé de correction d'une forme d'onde de déplacement représentatif comprend en outre :

   une étape (S31) de détermination d'une forme d'onde de déplacement virtuel en appliquant la forme d'onde d'accélération mesurée de l'onde sismique à la formule d'approximation ;
   une étape (S32, S33) de détermination, par une analyse fréquentielle de la forme d'onde de déplacement virtuel, d'une forme d'onde de déplacement pour correction qui reflète au moins partiellement la bande de fréquences autre que la bande de fréquences déterminée ; et
   une étape (S40) de correction, conformément à la forme d'onde de déplacement pour correction, de la forme d'onde de déplacement représentatif utilisée comme base de ladite courbe de performance (L40).

2. Procédé de correction d'une forme d'onde de déplacement représentatif selon la revendication 1, comprenant en outre :

   une étape (S16) de calcul de la forme d'onde d'accélération représentative utilisée comme base de ladite courbe de performance, dans laquelle cette étape comprend :

   une première étape (S13) d'exécution, pour chaque étage d'une construction (100), d'un calcul d'une forme d'onde d'accélération absolue qui reflète la bande de fréquences déterminée et ne reflète pas la bande de fréquences autre que la bande de fréquences déterminée sur la base d'une analyse fréquentielle de forme d'onde d'accélération mesurée d'une onde sismique ; et
   une deuxième étape (S16) de calcul de la forme d'onde d'accélération représentative qui représente les formes d'onde d'accélération absolue des étages de la construction (100).

3. Procédé de correction d'une forme d'onde de déplacement représentatif selon la revendication 2, dans lequel l'analyse fréquentielle comprend l'exécution de cycles de transformation et de sélection d'ondelettes, dans lequel des rangs sélectionnés au cours de l'analyse fréquentielle dans l'étape de détermination de la forme d'onde de déplacement pour correction ne comprennent pas des rangs sélectionnés lors de l'analyse fréquentielle dans la première étape (S13), dans l'étape (S16) consistant à calculer la forme d'onde d'accélération représentatif.

4. Procédé de correction d'une forme d'onde de déplacement représentatif selon la revendication 3, dans lequel un rang comprenant une fréquence ayant la plus grande amplitude maximale par rapport aux autres amplitudes maximales d'autres fréquences est comprise dans les rangs sélectionnés au cours de l'analyse fréquentielle dans la première étape (S13), dans l'étape (S16) consistant à calculer la forme d'onde d'accélération représentatif.

5. Procédé de correction d'une forme d'onde de déplacement représentatif selon l'une quelconque des revendications 2 à 4, dans lequel

une valeur d'accélération de la forme d'onde d'accélération représentative est une valeur corrigée en fonction d'un rapport massique équivalent.

6. Procédé de correction d'une forme d'onde de déplacement représentatif selon l'une quelconque des revendications 2 à 5, comprenant en outre :

une étape (S16) de détermination de la forme d'onde de déplacement représentatif utilisée comme base ladite courbe de performance, dans laquelle cette étape comprend :

une étape (S13) consistant à effectuer, pour chaque étage dans la construction (100), un calcul d'une forme d'onde de déplacement absolu par l'intégrale de la valeur d'accélération d'une forme d'onde d'accélération absolue ;
une étape (S15) de calcul d'une forme d'onde de déplacement relatif pour chaque étage en soustrayant une forme d'onde de déplacement absolu à un point de référence à partir de la forme d'onde de déplacement absolu à chaque étage de la construction (100) ; et
une étape (S16) de calcul d'une forme d'onde de déplacement représentatif qui représente les formes d'onde de déplacement relatif pour les étages.

7. Procédé d'évaluation de performance sismique résiduelle d'une construction (100) sur la base de la forme d'onde de déplacement représentatif qui est corrigée par le procédé selon l'une quelconque des revendications 1 à 6.

8. Procédé d'évaluation de la performance sismique résiduelle d'une construction (100) par l'utilisation d'une courbe de performance qui est déterminée à partir de la forme d'onde de déplacement représentatif corrigée par un procédé selon l'une quelconque des revendications 1 à 6 et de la forme d'onde d'accélération représentative.

9. Ordinateur configuré pour effectuer les étapes consistant à :

déterminer (S21) une courbe de performance (L40) qui est configurée, sur la base de l'analyse fréquentielle de forme d'onde d'accélération mesurée d'une onde sismique, pour refléter une bande de fréquences déterminée de la forme d'onde d'accélération mesurée et ne pas refléter une bande de fréquences autre que la bande de fréquences déterminée, dans lequel la courbe de performance est une courbe dans un système de coordonnées ayant un premier axe (Sd) de déplacement représentatif et d'un second axe (Sa), vertical par rapport au premier axe, d'accélération représentative, chaque point de la courbe fournissant une valeur d'une forme d'onde de déplacement représentatif et une valeur au même moment d'une forme d'onde d'accélération représentative ; et
déterminer (S22) une formule d'approximation (L41) s'approchant de la courbe de performance ;
**caractérisé en ce que** l'ordinateur est en outre configuré pour effectuer les étapes consistant à :

déterminer (S31) une forme d'onde de déplacement virtuel en appliquant la forme d'onde d'accélération mesurée de l'onde sismique à la formule d'approximation ;
déterminer (S32, S33), par une analyse fréquentielle de la forme d'onde de déplacement virtuel, une forme d'onde de déplacement pour correction qui reflète au moins partiellement la bande de fréquences autre que la bande de fréquences déterminée ; et
corriger (S40), conformément à la forme d'onde de déplacement pour correction, la forme d'onde de déplacement représentatif utilisée comme base pour ladite courbe de performance (L40).

10. Programme configuré pour ordonner à un ordinateur d'effectuer les étapes suivantes :

déterminer (S21) une courbe de performance (L40) qui est configurée, sur la base de l'analyse fréquentielle de la forme d'onde d'accélération mesurée d'une onde sismique, pour refléter une bande de fréquences déterminée de la forme d'onde d'accélération mesurée et ne pas refléter une bande de fréquences autre que la bande de fréquences déterminée, dans lequel la courbe de performance est une courbe dans un système de coordonnées ayant un premier axe (Sd) de déplacement représentatif et un deuxième axe (Sa), vertical par rapport au premier axe, d'accélération représentative, chaque point sur la courbe fournissant une valeur d'une forme d'onde de déplacement représentatif et une valeur au même moment d'une forme d'onde d'accélération représentative ;
déterminer (S22) une formule d'approximation (L41) s'approchant de la courbe de performance ;
déterminer (S31) une forme d'onde de déplacement virtuel en appliquant la forme d'onde d'accélération mesurée de l'onde sismique à la formule d'approximation ;

déterminer (S32, S33), par une analyse fréquentielle de la forme d'onde de déplacement virtuel, une forme d'onde de déplacement pour correction qui reflète au moins partiellement la bande de fréquences autre que la bande de fréquences déterminée ; et

corriger (S40), conformément à la forme d'onde de déplacement pour correction, la forme d'onde de déplacement représentatif utilisée comme base de ladite courbe de performance (L40).

11. Support de stockage d'informations dans lequel le programme électronique selon la revendication 10 est stocké d'une manière lisible.

12. Procédé d'évaluation de performance sismique résiduelle d'une construction (100), comprenant :

une étape (S13) consistant à effectuer, pour chaque étage d'une construction (100), un calcul d'une forme d'onde d'accélération absolue qui, sur la base d'une analyse fréquentielle de forme d'onde d'accélération mesurée d'une onde sismique, reflète une bande de fréquences déterminée de la forme d'onde d'accélération mesurée et ne reflète pas une bande de fréquences autre que la bande de fréquences déterminée ;

une étape (S16) consistant à calculer une forme d'onde d'accélération représentative qui représente une ou plusieurs formes d'onde d'accélération absolue pour les étages de la construction (100) ;

une étape (S13) consistant à exécuter, pour chaque étage de la construction (100), un calcul d'une forme d'onde de déplacement absolu par l'intégrale des valeurs d'accélération de la forme d'onde d'accélération absolue ;

une étape (S15) consistant à calculer une forme d'onde de déplacement relatif pour chaque étage en soustrayant une forme d'onde de déplacement absolu à un point de référence à partir de la forme d'onde de déplacement absolu à chaque étage de la construction (100) ;

une étape (S16) consistant à calculer une forme d'onde de déplacement représentatif qui représente les formes d'onde de déplacement relatif pour les étages ;

une étape consistant à corriger la forme d'onde de déplacement représentatif selon la revendication 1, dans laquelle la courbe de performance est déterminée en se basant sur la forme d'onde de déplacement représentatif et la forme d'onde d'accélération représentatif ; et

une étape (S50) de détermination d'une courbe de performance basée sur la forme d'onde de déplacement représentatif corrigée par la forme d'onde de déplacement pour correction et la forme d'onde d'accélération représentative, et l'évaluation de la performance sismique résiduelle de la construction (100) sur la base de cette courbe de performance déterminée.

13. Système d'évaluation de performance sismique configuré pour réaliser :

une étape d'exécution (S13), pour chaque étage d'une construction (100), d'un calcul d'une forme d'onde d'accélération absolue qui est configurée, sur la base d'une analyse fréquentielle de la forme d'onde d'accélération mesurée d'une onde sismique, pour refléter une bande de fréquences déterminée de la forme d'onde d'accélération mesurée et ne pas refléter une bande de fréquences autre que la bande de fréquences déterminée ;

une étape de calcul (S16) d'une forme d'onde d'accélération représentative qui représente une ou plusieurs formes d'onde d'accélération absolue des étages de la construction (100) ;

une étape d'exécution (S13), pour chaque étage de la construction (100), d'un calcul d'une forme d'onde de déplacement absolu par l'intégrale de la valeur d'accélération d'une forme d'onde d'accélération absolue ;

une étape de calcul (S15) d'une forme d'onde de déplacement relatif pour chaque étage en soustrayant une forme d'onde de déplacement absolu à un point de référence à partir de la forme d'onde de déplacement absolu à chaque étage de la construction (100) ;

une étape de calcul (S16) d'une forme d'onde de déplacement représentatif qui représente les formes d'onde de déplacement relatif pour les étages ;

comprenant en outre les étapes consistant à :

déterminer (S21) une courbe de performance (L40) qui est configurée, sur la base d'une analyse fréquentielle de la forme d'onde d'accélération mesurée d'une onde sismique, pour refléter une bande de fréquences déterminée de la forme d'onde d'accélération mesurée et ne pas refléter une bande de fréquences autre que la bande de fréquences déterminée, dans lequel la courbe de performance est une courbe dans un système de coordonnées ayant un premier axe (Sd) de déplacement représentatif et un second axe (Sa), vertical par rapport au premier axe, d'accélération représentative, chaque point de la courbe fournissant une valeur d'une forme d'onde de déplacement représentatif et une valeur au même moment d'une forme d'onde d'accélération représentative ;

déterminer (S22) une formule d'approximation (L41) s'approchant de la courbe de performance ;

déterminer (S31) une forme d'onde de déplacement virtuel en appliquant la forme d'onde d'accélération mesurée de l'onde sismique à la formule d'approximation ;

déterminer (S32, S33), par une analyse fréquentielle de la forme d'onde de déplacement virtuel, une forme d'onde de déplacement pour correction qui reflète au moins partiellement la bande de fréquences autre que la bande de fréquences déterminée ; et

corriger (S40), conformément à la forme d'onde de déplacement pour correction, la forme d'onde de déplacement représentatif utilisée comme base pour ladite courbe de performance (L40),

dans lequel la courbe de performance est déterminée sur la base de la forme d'onde de déplacement représentatif et de la forme d'onde d'accélération représentative ; et

une étape consistant à déterminer (S50) une courbe de performance sur la base de la forme d'onde de déplacement représentant corrigée par la forme d'onde de déplacement pour correction et de la forme d'onde d'accélération représentative, et l'évaluation de la performance sismique résiduelle d'une construction (100) en fonction de cette courbe de performance déterminée.

[Fig. 1]

[Fig. 2]

[Fig. 3]

```
┌─────────────────────────────────────────────────────────────────────────────┐
│ Generation of representative acceleration and representative displacement waveforms │
│ based on measurement(S10)                                                      │
│ ┌───────────────────────────────┐      ┌───────────────────────────────────┐ │
│ │ Generation of measured acceleration │→ │      Gathering data (S14)          │ │
│ │        waveform data(S11)       │     └───────────────────────────────────┘ │
│ └───────────────────────────────┘                        ↓                    │
│               ↓                        ┌───────────────────────────────────┐  │
│ ┌───────────────────────────────┐      │  Generation of relative displacement │ │
│ │     Associating to time (S12)   │     │         waveform data(S15)          │ │
│ └───────────────────────────────┘      └───────────────────────────────────┘  │
│               ↓                                          ↓                    │
│ ┌───────────────────────────────┐      ┌───────────────────────────────────┐  │
│ │ Generation of absolute acceleration and │ Generation of representative acceleration and │
│ │  displacement waveform data(S13) │     │ representative displacement waveform data(S16) │
│ └───────────────────────────────┘      └───────────────────────────────────┘  │
└─────────────────────────────────────────────────────────────────────────────┘

┌─────────────────────────────────────────────────────────────────────────────┐
│ Generation of restoration model(S20)                                          │
│   ┌───────────────────────────────┐      ┌──────────────────────────────┐     │
│   │   Generation of performance curve │→ │                              │     │
│   │  for restoration modelling(S21) │    │   Restoration modelling(S22)   │     │
│   └───────────────────────────────┘      └──────────────────────────────┘     │
└─────────────────────────────────────────────────────────────────────────────┘

┌─────────────────────────────────────────────────────────────────────────────┐
│  Generation of displacement waveform                                          │
│ for residual diaplacement based on simulation(S30)                            │
│ ┌───────────────────────────────────────────────────────────────────────┐    │
│ │          Generation of virtual displacement waveform data              │    │
│ │    by applying measured seismic wave to restoration model(S31)         │    │
│ └───────────────────────────────────────────────────────────────────────┘    │
│               ↓                                                                │
│ ┌───────────────────────────────┐      ┌──────────────────────────────────┐   │
│ │      Frequency analysis of      │→    │ Generation of displacement waveform │ │
│ │ virtual displacement waveform(S32) │  │ data of residual displacement(S32) │ │
│ └───────────────────────────────┘      └──────────────────────────────────┘   │
└─────────────────────────────────────────────────────────────────────────────┘
                                                 ↓
        ┌───────────────────────────────────────────────────────────────┐
        │ Correcting displacement waveform of representative displacement  │
        │  by displacement waveform of residual displacementl(S40)        │
        └───────────────────────────────────────────────────────────────┘
                                    ↓
              ┌─────────────────────────────────────────┐
              │        Generation of performance curve   │
              │          for determination(S50)          │
              └─────────────────────────────────────────┘
                                    ↓
              ┌─────────────────────────────────────────┐
              │            Determination(S60)            │
              └─────────────────────────────────────────┘
```

29

[Fig. 4]

[Fig. 5]

[Fig. 6]

[Fig. 7]

[Fig.8]

[Fig. 9]

[Fig. 10]

[Fig. 11]

[Fig. 12]

[Fig. 13]

[Fig. 14]

[Fig. 15]

EP 2 947 445 B1

[Fig. 16]

42

[Fig. 17]

[Fig. 18]

[Fig. 19]

[Fig. 20]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003344213 A

- JP 2011095237 A